# EUROPEAN PATENT APPLICATION

(11) **EP 4 428 982 A1**
(43) Date of publication of application: **11.09.2024**
(21) Application number: 22889808.6
(22) Date of filing: 21.10.2022
(51) Int. Cl.: H01M 10/0569, H01M 10/052, H01M 10/0568

(54) **FLAME-RETARDANT NON-AQUEOUS ELECTROLYTIC SOLUTION AND SECONDARY BATTERY USING SAME**

(30) Priority: 05.11.2021 JP 2021181018
(71) Applicant: Kyoto University, Kyoto-shi, Kyoto 606-8501 (JP); Stella Chemifa Corporation, Osaka-shi, Osaka 541-0044 (JP)
(72) Inventor: NOHIRA, Toshiyuki, Kyoto-shi, Kyoto 606-8501 (JP); FUKUNAKA, Yasuhiro, Kyoto-shi, Kyoto 606-8501 (JP); MINE, Natsuki, Izumiotsu-shi, Osaka 595-0075 (JP); KAWAKAMI, Arata, Izumiotsu-shi, Osaka 595-0075 (JP); OMURA, Misaki, Izumiotsu-shi, Osaka 595-0075 (JP); EDA, Shohei, Izumiotsu-shi, Osaka 595-0075 (JP); KOJIMA, Yutaka, Izumiotsu-shi, Osaka 595-0075 (JP); KATSURA, Yoshifumi, Izumiotsu-shi, Osaka 595-0075 (JP); SATO, Yoshinori, Izumiotsu-shi, Osaka 595-0075 (JP); SAKAGUCHI, Toshitaka, Izumiotsu-shi, Osaka 595-0075 (JP); KON, Sojiro, Izumiotsu-shi, Osaka 595-0075 (JP); HASEBE, Rui, Izumiotsu-shi, Osaka 595-0075 (JP); NII, Keiichi, Izumiotsu-shi, Osaka 595-0075 (JP); NISHIDA, Tetsuo, Izumiotsu-shi, Osaka 595-0075 (JP)
(74) Representative: Meissner Bolte Partnerschaft mbB
(86) International application number: PCT/JP2022/039372
(87) International publication number: WO 2023/079988

(57) **Abstract**

Provided are a flame-retardant non-aqueous electrolytic solution which exhibits good flame retardancy and has excellent cycle characteristics and electrical resistance characteristics, and a secondary battery using the flame-retardant non-aqueous electrolytic solution. The flame-retardant non-aqueous electrolytic solution according to the present invention contains at least a non-aqueous solvent and an electrolyte dissolved in the non-aqueous solvent, the non-aqueous solvent contains at least one of phosphoric acid esters of chemical formulae (1) to (3) below, the electrolyte contains at least one of a difluorophosphoric acid salt and a nitric acid salt, and the content of the phosphoric acid ester is 20 mass% or more with respect to the total mass of the flame-retardant non-aqueous electrolytic solution: 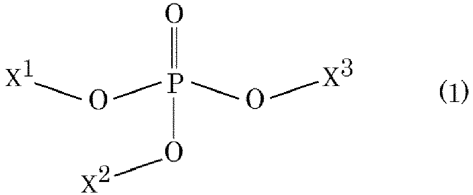 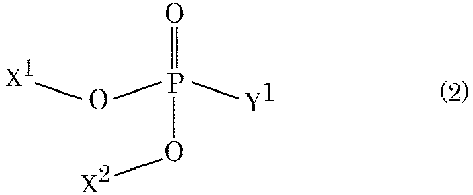 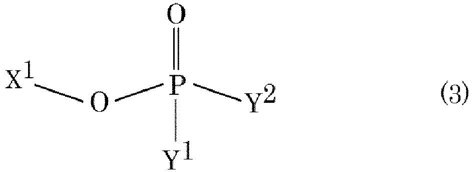 wherein X¹ to X³ each independently represent a hydrocarbon group having 1 to 20 carbon atoms, or the like, and Y¹ and Y² each independently represent a halogen atom.

## Description

### TECHNICAL FIELD

The present invention relates to a flame-retardant non-aqueous electrolytic solution which exhibits excellent cycle characteristics even after repetition of charge-discharge over extended cycles, and a secondary battery using the flame-retardant non-aqueous electrolytic solution.

### BACKGROUND ART

For conventional lithium ion secondary batteries, a flammable electrolytic solution is utilized. Therefore, a charged state is an unstable state in which a so-called easy-to-burn electrolytic solution is filled with energy. Therefore, if an abnormality such as an electrical short occurs within the battery, this may lead to a firing accident or the like. In this regard, for conventional lithium ion secondary batteries, it is necessary to ensure safety as a precondition for improvement of energy density.

Here, flame retardancy and a self-extinguishing property may be imparted to a battery material, particularly to an electrolytic solution for preventing a firing accident of a lithium ion secondary battery. For example, Patent Documents 1 to 3 indicate that a trialkyl phosphate which is a phosphoric acid ester is used for a solvent of an electrolytic solution or used by being added to a conventional electrolytic solution. In the case of the electrolytic solutions disclosed in these patent documents, the safety of the secondary battery can be improved by imparting flame retardancy to the electrolytic solution, but depending on the type and the amount of a trialkyl phosphate used, battery characteristics such as coulombic efficiency do not fall within an acceptable range.

One of the causes of deterioration of the battery characteristics of a secondary battery is that a phosphoric acid ester is degraded because an electrolytic solution used is exposed to an electrochemically strong oxidation-reduction atmosphere. To address this, a compound other than the phosphoric acid ester may be used in combination, and made to form a stable film on a surface of an electrode, thereby suppressing degradation of the electrolytic solution.

For example, in Patent Document 4, a carboxylic acid ester is added to an electrolytic solution in addition to a phosphoric acid ester. In Patent Documents 5 and 6, a carbonic acid ester having an unsaturated bond is added to an electrolytic solution. In Patent Document 7, a halogenated alkoxybenzene is added to an electrolytic solution. In Patent Document 8, a cyclic phosphoric acid ester is added to an electrolytic solution. In Patent Document 9, a halogenated alkyl phosphate is added to an electrolytic solution.

However, in the case of the electrolytic solutions disclosed in these patent documents, the formation of a stable film on a surface of an electrode causes another problem that electrical resistance during charge-discharge increases.

### PRIOR ART DOCUMENT

### PATENT DOCUMENTS

Patent Document 1: JP-A-4-184870
Patent Document 2: JP-A-7-114940
Patent Document 3: JP-A-2001-307768
Patent Document 4: JP-A-8-88023
Patent Document 5: JP-A-11-260401
Patent Document 6: JP-A-2002-203597
Patent Document 7: JP-A-11-40193
Patent Document 8: JP-A-2002-184459
Patent Document 9: JP-A-2007-141760

### SUMMARY OF THE INVENTION

### PROBLEMS TO BE SOLVED BY THE INVENTION

The present invention has been made in view of the above-described problems, and an object of the present invention if to provide a flame-retardant non-aqueous electrolytic solution which exhibits good flame retardancy and has excellent cycle characteristics and electrical resistance characteristics, and a secondary battery using the flame-retardant non-aqueous electrolytic solution.

### SOLUTIONS TO THE PROBLEMS

It has been found that when at least one of a difluorophosphoric acid salt and a nitric acid ester is used as an electrolyte and a specific phosphoric acid ester is used as a non-aqueous solvent, the difluorophosphoric acid salt and the nitric acid salt are dissolved in the specific phosphoric acid ester at a high concentration, and when the solution is used as an electrolytic solution, good flame retardancy, and excellent cycle characteristics and electrical resistance characteristics are exhibited. In this way, the present invention has been completed.

In order to solve the above-mentioned problems, the flame-retardant non-aqueous electrolytic solution according to the present invention comprises at least a non-aqueous solvent and an electrolyte dissolved in the non-aqueous solvent, wherein the non-aqueous solvent contains at least one of phosphoric acid esters of chemical formulae (1) to (3) below, the electrolyte contains at least one of a difluorophosphoric acid salt and a nitric acid salt, and a content of the phosphoric acid ester is 20 mass% or more with respect to a total mass of the flame-retardant non-aqueous electrolytic solution: 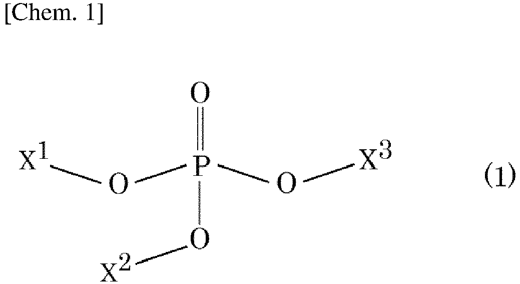 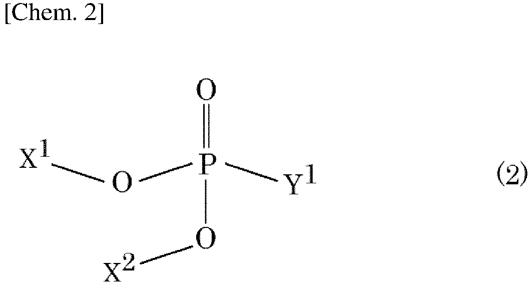 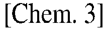 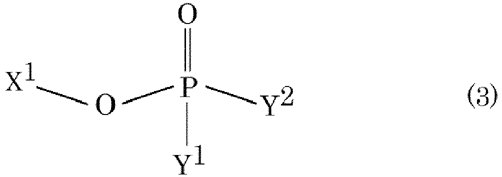 wherein X¹ to X³ each independently represent a hydrocarbon group having 1 to 20 carbon atoms; a silyl group having 1 to 20 carbon atoms; a hydrocarbon group having 1 to 20 carbon atoms and at least one of a halogen atom, a heteroatom and an unsaturated bond; or a silyl group having 1 to 20 carbon atoms and at least one of a halogen atom, a heteroatom and an unsaturated bond, or each of X¹ to X³ is any of the hydrocarbon group having 1 to 20 carbon atoms; the silyl group having 1 to 20 carbon atoms; the hydrocarbon group having 1 to 20 carbon atoms and at least one of a halogen atom, a heteroatom and an unsaturated bond; and the silyl group having 1 to 20 carbon atoms and at least one of a halogen atom, a heteroatom and an unsaturated bond, and arbitrarily selected combinations thereof are bonded to one another to form a cyclic structure, and Y¹ and Y² each independently represent a halogen atom.

In the above configuration, it is preferred that a molar fraction of at least one of the difluorophosphoric acid salt and the nitric acid salt is 0.1 or more with respect to a total number of moles of the electrolyte.

In the above configuration, it is preferred that at least one of the difluorophosphoric acid salt and the nitric acid salt is an alkali metal salt.

In the above configuration, it is preferred that at least one of the difluorophosphoric acid salt and the nitric acid salt is a lithium salt.

In the above configuration, it is preferred that the phosphoric acid ester is trimethyl phosphate, triethyl phosphate, tributyl phosphate, triphenyl phosphate, diethyl monofluorophosphate, diethyl monochlorophosphate, ethyl difluorophosphate, ethyl dichlorophosphate, and diethyl(2-(2-(2-methoxyethoxy)ethoxy)ethyl) phosphate.

In the above configuration, it is preferable to comprise, as the electrolyte, at least one of other electrolytes having an anion of BF₄⁻, PF₆⁻, N(CF₃SO₂)₂⁻ or N(SO₂F)₂⁻.

In the above configuration, it is preferable to comprise, as the non-aqueous solvent, at least one selected from a group consisting of a cyclic carbonic acid ester, a chain carbonic acid ester, cyclic ether, chain ether, a lactone compound, a chain ester, a nitrile compound, an amide compound, a sulfone compound and a sulfoxide compound.

In the above configuration, it is preferable to comprise, as the non-aqueous solvent, at least one selected from a group consisting of propylene carbonate, ethylene carbonate, γ-butyrolactone, dimethyl sulfoxide, and tetraethylene glycol dimethyl ether.

In order to solve the above-mentioned problems, the secondary battery according to the present invention comprises at least the flame-retardant non-aqueous electrolytic solution, and a positive electrode and a negative electrode.

### EFFECTS OF THE INVENTION

According to the present invention, it is possible to improve the flame retardancy of a flame-retardant electrolytic solution by using a non-aqueous solvent containing at least one of phosphoric acid esters of the chemical formulae (1) to (3). In the present invention, at least one of a difluorophosphoric acid salt and a nitric acid salt that are soluble in a non-aqueous solvent containing the phosphoric acid ester is incorporated as an electrolyte. This enables the provision of a flame-retardant non-aqueous electrolytic solution which suppresses an increase in electrical resistance in electrodes (positive electrode and negative electrode) after repetition of charge-discharge, maintains a good capacity retention rate even after repetition of charge-discharge over extended cycles, and has excellent cycle characteristics, and a secondary battery using the flame-retardant non-aqueous electrolytic solution.

Although the mechanism of improvement of the cycle characteristics and the electrical resistance characteristics remains unclear, at least one of a difluorophosphoric acid salt and a nitric acid salt incorporated as an electrolyte forms a film of good quality on a surface of an electrode (electrode active material layer), thereby preventing the electrolytic solution from being exposed to an electrochemically strong oxidation-reduction atmosphere. It is considered that as a result, degradation of the phosphoric acid ester in the electrolytic solution is suppressed, so that cycle characteristics and electric resistance characteristics are inhibited from deteriorating, or improved.

### BRIEF DESCRIPTION OF THE DRAWINGS

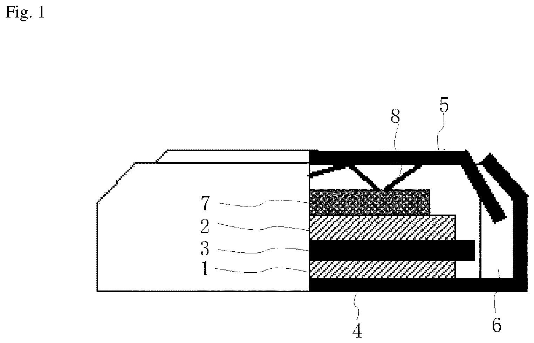

Fig. 1 is a schematic sectional view showing an outline of a non-aqueous secondary battery according to an embodiment of the present invention.

### EMBODIMENT OF THE INVENTION

### (Flame-retardant non-aqueous electrolytic solution)

The flame-retardant non-aqueous electrolytic solution (hereinafter, referred to as a "non-aqueous electrolytic solution") according to the present embodiment contains at least a non-aqueous solvent and an electrolyte dissolved in the non-aqueous solvent, and can be suitably used for an electrolytic solution of a secondary battery such as a lithium ion secondary battery.

The non-aqueous solvent used contains at least one of phosphoric acid esters of the following chemical formulae (1) to (3) (which may be collectively referred to as a "phosphoric acid ester" hereinafter). The electrolyte used contains at least one of a difluorophosphoric acid salt and a nitric acid salt.

An irreversible reaction which is decomposition of a non-aqueous electrolytic solution occurs at an interface between an electrode and the non-aqueous electrolytic solution during initial charge. The properties, such as heat stability, ion conductivity, morphology and denseness, of a film formed may significantly change depending on the types of an electrode active material, a non-aqueous solvent and an electrolyte in the non-aqueous electrolytic solution and additives added as necessary, and charge-discharge conditions. In the present embodiment, a phosphoric acid ester is used as a non-aqueous solvent, and at least one of a difluorophosphoric acid salt and a nitric acid salt is used as an electrolyte. It is considered that this results in formation of an effective film on a surface of the electrode (electrode active material layer), and the properties of the film are utilized to improve the cycle characteristics and electrical resistance characteristics of a secondary battery. A phosphoric acid ester is used as the non-aqueous solvent. This enables sufficient flame retardancy to be imparted to the non-aqueous electrolytic solution.

### <Non-aqueous solvent>

### [Phosphoric acid ester]

As described above, the non-aqueous solvent contains at least one of phosphoric acid esters of the following chemical formulae (1) to (3).

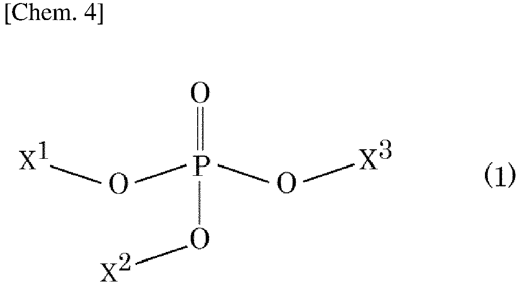

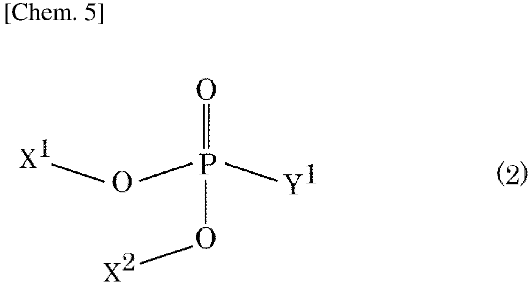

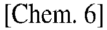

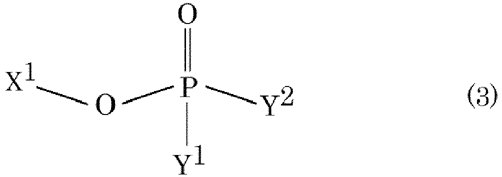

In chemical formulae (1) to (3), X¹ to X³ each independently represent a hydrocarbon group; a silyl group; a hydrocarbon group having at least one of a halogen atom, a heteroatom and an unsaturated bond (hereinafter, referred to as a "hydrocarbon group having a halogen atom or the like"); or a silyl group having at least one of a halogen atom, a heteroatom and an unsaturated bond (hereinafter, referred to as a "silyl group having a halogen atom or the like"). Alternatively, each of X¹ to X³ is any of the hydrocarbon group having 1 to 20 carbon atoms; the silyl group having 1 to 20 carbon atoms; the hydrocarbon group having 1 to 20 carbon atoms and at least one of a halogen atom, a heteroatom and an unsaturated bond; and the silyl group having 1 to 20 carbon atoms and at least one of a halogen atom, a heteroatom and an unsaturated bond, and arbitrarily selected combinations thereof are bonded to one another to form a cyclic structure.

The number of carbon atoms in the hydrocarbon group in X¹ to X³ is 1 to 20, preferably 1 to 10, and more preferably 1 to 4. The range of the number of carbon atoms in the present specification means that the range includes all integer numbers of carbon atoms which fall within the range. Therefore, for example, the hydrocarbon group having "1 to 3 carbon atoms" means all of hydrocarbon groups having 1, 2 and 3 carbon atoms.

The number of carbon atoms in the silyl group in X¹ to X³ is 1 to 20, preferably 1 to 10, and more preferably 1 to 4.

The hydrocarbon group having a halogen atom in X¹ to X³ means a functional group in which a part or all of hydrogen atoms in the hydrocarbon group are replaced with a halogen atom. Examples of the halogen atom include atoms of fluorine, chlorine, bromine and iodine. Among the hydrocarbon groups having 1 to 20 carbon atoms and a halogen atom, hydrocarbon groups having 1 to 10 carbon atoms and a halogen atom are preferable, and hydrocarbon groups having 1 to 4 carbon atoms and a halogen atom are more preferable.

The hydrocarbon group having a heteroatom in X¹ to X³ means a functional group in which a part or all of hydrogen atoms and carbon atoms in the hydrocarbon group are replaced with a heteroatom. The heteroatom represents an atom of oxygen, nitrogen, sulfur or the like. Among the hydrocarbon groups having 1 to 20 carbon atoms and a heteroatom, hydrocarbon groups having 1 to 10 carbon atoms and a heteroatom are preferable, and hydrocarbon groups having 1 to 4 carbon atoms and a heteroatom are more preferable.

The hydrocarbon group having an unsaturated bond in X¹ to X³ means, for example, a hydrocarbon group having a carbon-carbon double bond or triple bond. The number of unsaturated bonds is preferably in the range of 1 to 10, more preferably in the range of 1 to 5, and particularly preferably in the range of 1 to 3.

The silyl group having a halogen atom in X¹ to X³ means a functional group in which a part or all of hydrogen atoms in the silyl group are replaced with a halogen atom. Examples of the halogen atom include atoms of fluorine, chlorine, bromine and iodine. Among the silyl groups having 1 to 20 carbon atoms and a halogen atom, silyl groups having 1 to 10 carbon atoms and a halogen atom are preferable, and silyl groups having 1 to 4 carbon atoms and a halogen atom are more preferable.

The silyl group having a heteroatom in X¹ to X³ means a functional group in which a part or all of hydrogen atoms and carbon atoms in the silyl group are replaced with a heteroatom. The heteroatom represents an atom of oxygen, nitrogen, sulfur or the like. Among the silyl groups having 1 to 20 carbon atoms and a heteroatom, silyl groups having 1 to 10 carbon atoms and a heteroatom are preferable, and silyl groups having 1 to 4 carbon atoms and a heteroatom are more preferable.

The silyl group having an unsaturated bond in X¹ to X³ means, for example, a silyl group having a carbon-carbon double bond or triple bond. The number of unsaturated bonds is preferably in the range of 1 to 10, more preferably in the range of 1 to 5, and particularly preferably in the range of 1 to 3.

The hydrocarbon group and the hydrocarbon group having a halogen atom and the like are not limited, and examples thereof include a chain alkyl group such as a methyl group, an ethyl group, a propyl group, a butyl group, an isopropyl group, a pentyl group, a hexyl group, a heptyl group and an octyl group, and a cyclic alkyl group such as a cyclopentyl group and a cyclohexyl group; a halogen-containing chain alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; a halogen-containing cycloalkyl group such as a 2-iodocyclohexyl group, a 2-bromocyclohexyl group, a 2-chlorocyclohexyl group and a 2-fluorocyclohexyl group; a chain alkenyl group such as a 2-propenyl group, an isopropenyl group, a 2-butenyl group and a 3-butenyl group; a cyclic alkenyl group such as a 2-cyclopentenyl group, a 2-cyclohexenyl group and a 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group and a 4-pentynyl group; an aryl group such as a phenyl group; an alkoxyphenyl group such as a 3-methoxyphenyl group, a 4-methoxyphenyl group, a 3,5-dimethoxyphenyl group and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; a naphthyl group such as a 1-naphthyl group, a 2-naphthyl group and a 3-amino-2-naphthyl group; and a 2-methoxyethyl group, a 2-(2-methoxyethoxy)ethyl group, a 2-(2-(2-methoxyethoxy)ethoxy)ethyl group and a 2-(2-(2-(2-methoxyethoxy)ethoxy)ethoxy)ethyl group.

In the chemical formulae (2) and (3), Y¹ and Y² each independently represent a halogen atom. Examples of the halogen atom include atoms of fluorine, chlorine, bromine and iodine.

Specific examples of the phosphoric acid ester represented by chemical formula (1) include trimethyl phosphate, triethyl phosphate, tripropyl phosphate, tributyl phosphate, tripentyl phosphate, trihexyl phosphate, triphenyl phosphate, ethyldimethyl phosphate, diethylmethyl phosphate, methyldipropyl phosphate, dimethylpropyl phosphate, butylmethyl phosphate, dibutylmethyl phosphate, dimethylpentyl phosphate, methyldipentyl phosphate, hexyldimethyl phosphate, dihexylmethyl phosphate, diheptylmethyl phosphate, heptyldimethyl phosphate, ethyldipropyl phosphate, diethylpropyl phosphate, butyldiethyl phosphate, dibutylethyl phosphate, ethyldipentyl phosphate, diethylpentyl phosphate, ethyldihexyl phosphate, diethylhexyl phosphate, ethylheptyl phosphate, diethylheptyl phosphate, butyldipropyl phosphate, dibutylpropyl phosphate, butyldipentyl phosphate, dibutylpentyl phosphate, butyldihexyl phosphate, dibutylhexyl phosphate, butyldiheptyl phosphate, dibutylheptyl phosphate, hexylpentyl phosphate, dihexylpentyl phosphate, heptylpentyl phosphate, diheptylpentyl phosphate, diheptylhexyl phosphate, heptyldihexyl phosphate, ethylmethylpropyl phosphate, ethylmethylbutyl phosphate, ethylmethylpentyl phosphate, ethylhexylmethyl phosphate, ethylheptylmethyl phosphate, tris(2,2,2-trifluoroethyl) phosphate, tris(2,2,2-trichloroethyl) phosphate, tris(2,2,2-tribromoethyl) phosphate, tris(2,2,2-triiodoethyl) phosphate, tris(1,1,1,3,3,3-hexafluoroisopropyl) phosphate, tris(1,1,1,3,3,3-hexachloroisopropyl) phosphate, tris(1,1,1,3,3,3-hexabromoisopropyl) phosphate, tris(1,1,1,3,3,3-hexaiodoisopropyl) phosphate, (2,2,2-trifluoroethyl)diethyl phosphate, bis(2,2,2-trifluoroethyl)ethyl phosphate, (1,1,1,3,3,3-hexafluoroisopropyl)diethyl phosphate, bis(1,1,1,3,3,3-hexafluoroisopropyl)ethyl phosphate, tris(2-methoxyethyl) phosphate, tris(2-(2-methoxyethoxy)ethyl) phosphate, phosphate, tris(2-(2-(2-methoxyethoxy)ethoxy)ethyl) phosphate, tris phosphate, tris(2-(2-(2-(2-methoxyethoxy)ethoxy)ethoxy)ethyl) phosphate, diethyl(2-methoxyethyl), diethyl(2-(2-methoxyethoxy)ethyl) phosphate, diethyl(2-(2-(2-methoxyethoxy)ethoxy)ethyl) phosphate, diethyl(2-(2-(2-(2-methoxyethoxy)ethoxy)ethoxy)ethyl) phosphate, ethylbis(2-methoxyethyl) phosphate, ethylbis(2-(2-methoxyethoxy)ethyl) phosphate, ethylbis(2-(2-(2-methoxyethoxy)ethoxy)ethyl) phosphate, ethylbis(2-(2-(2-(2-methoxyethoxy)ethoxy) ethoxy)ethyl) phosphate, tris(trimethylsilyl) phosphate, tris(trimethylbutyl) phosphate tris(triphenylsilyl) phosphate, tris(dimethylphenylsilyl) phosphate, and tris(dimethylvinylsilyl) phosphate. These phosphoric acid esters can be used alone, or used in combination of two or more thereof.

Among the exemplified phosphoric acid esters represented by the chemical formula (1), trimethyl phosphate, triethyl phosphate, triisopropyl phosphate and tributyl phosphate are preferable, trimethyl phosphate, triethyl phosphate and tributyl phosphate are more preferable, triethyl phosphate and trimethyl phosphate are still more preferable, and triethyl phosphate is particularly preferable, from the viewpoint of easy availability.

Specific examples of the phosphoric acid ester represented by chemical formula (2) include dimethyl monofluorophosphate, diethyl monofluorophosphate, dipropyl monofluorophosphate, diisopropyl monofluorophosphate, dibutyl monofluorophosphate, dipentyl monofluorophosphate, diheptyl monofluorophosphate, bis(2,2,2-trifluoroethyl) monofluorophosphate, bis(1,1,1,3,3,3-hexafluoroisopropyl) monofluorophosphate, bis(2-methoxyethyl) monofluorophosphate, bis(2-(2-methoxyethoxy)ethyl) monofluorophosphate, bis(2-(2-(2-methoxyethoxy)ethoxy)ethyl) monofluorophosphate, bis(2-(2-(2-(2-methoxyethoxy) ethoxy)ethoxy)ethyl) monofluorophosphate, dimethyl monochlorophosphate, diethyl monochlorophosphate, dipropyl monochlorophosphate, diisopropyl monochlorophosphate, dibutyl monochlorophosphate, dipentyl monochlorophosphate, diheptyl monochlorophosphate, bis(2,2,2-trifluoroethyl) monochlorophosphate, bis(1,1,1,3,3,3-hexafluoroisopropyl) monochlorophosphate, bis(2-methoxyethyl) monochlorophosphate, bis(2-(2-methoxyethoxy)ethyl) monochlorophosphate, bis(2-(2-(2-methoxyethoxy)ethoxy)ethyl) monochlorophosphate, bis(2-(2-(2-(2-methoxyethoxy)ethoxy)ethoxy)ethyl) monochlorophosphate, dimethyl monobromophosphate, diethyl monobromophosphate, dipropyl monobromophosphate, diisopropyl monobromophosphate, dibutyl monobromophosphate, dipentyl monobromophosphate, diheptyl monobromophosphate, bis(2,2,2-trifluoroethyl) monobromophosphate, bis(1,1,1,3,3,3-hexafluoroisopropyl) monobromophosphate, bis(2-methoxyethyl) monobromophosphate, bis(2-(2-methoxyethoxy)ethyl) monobromophosphate, bis(2- (2-(2-methoxyethoxy)ethoxy)ethyl) monobromophosphate, bis(2-(2-(2-(2-methoxyethoxy)ethoxy)ethoxy)ethyl) monobromophosphate, dimethyl monoiodophosphate, diethyl monoiodophosphate, dipropyl monoiodophosphate, diisopropyl monoiodophosphate, dibutyl monoiodophosphate, dipentyl monoiodophosphate, diheptyl monoiodophosphate, bis(2,2,2-trifluoroethyl) monoiodophosphate, bis(1,1,1,3,3,3-hexafluoroisopropyl) monoiodophosphate, bis(2-methoxyethyl) monoiodophosphate, bis(2-(2-methoxyethoxy)ethyl) monoiodophosphate, bis(2-(2-(2-methoxyethoxy)ethoxy) ethyl) monoiodophosphate, bis(2-(2-(2-(2-methoxyethoxy)ethoxy)ethoxy)ethyl) monoiodophosphate, bis(trimethylsilyl) monofluorophosphate, bis(trimethylsilyl) monochlorophosphate, bis(trimethylsilyl) monobromophosphate, bis(trimethylsilyl) iodophosphate, bis(triethylsilyl) monofluorophosphate, bis(triethylsilyl) monochlorophosphate, bis(triethylsilyl) monobromophosphate, bis(triethylsilyl) monoiodophosphate, bis(dimethylphenylsilyl) monofluorophosphate, bis(dimethylphenylsilyl) monochlorophosphate, bis(dimethylphenylsilyl) monobromophosphate, bis(dimethylphenylsilyl) monoiodophosphate, bis(dimethylvinylsilyl) monofluorophosphate, bis(dimethylvinylsilyl) monochlorophosphate, bis(dimethylvinylsilyl) monobromophosphate, and bis(dimethylvinylsilyl) monoiodophosphate. These phosphoric acid esters can be used alone, or used in combination of two or more thereof.

Among the exemplified phosphoric acid esters represented by chemical formula (2), dimethyl monochlorophosphate, diethyl monochlorophosphate, dimethyl monofluorophosphate and diethyl monofluorophosphate are preferable, and dimethyl monofluorophosphate and diethyl monofluorophosphate are more preferable, from the viewpoint of easy availability and electrochemical stability.

Specific examples of the phosphoric acid ester represented by chemical formula (3) include methyl difluorophosphate, ethyl difluorophosphate, propyl difluorophosphate, isopropyl difluorophosphate, butyl difluorophosphate, pentyl difluorophosphate, hexyl difluorophosphate, heptyl difluorophosphate, (2,2,2-trifluoroethyl) difluorophosphate, (1,1,1,3,3,3-hexafluoroisopropyl) difluorophosphate, (2-methoxyethyl) difluorophosphate, (2-(2-methoxyethoxy)ethyl) difluorophosphate, (2-(2-(2-methoxyethoxy)ethoxy)ethyl) difluorophosphate, difluorophosphate (2-(2-(2-(2-methoxyethoxy)ethoxy)ethoxy)ethyl), methyl dichlorophosphate, ethyl dichlorophosphate, propyl dichlorophosphate, isopropyl dichlorophosphate, butyl dichlorophosphate, pentyl dichlorophosphate, hexyl dichlorophosphate, heptyl dichlorophosphate, (2,2,2-trifluoroethyl) dichlorophosphate, (1,1,1,3,3,3-hexafluoroisopropyl) dichlorophosphate, (2-methoxyethyl) dichlorophosphate, (2-(2-methoxyethoxy)ethyl) dichlorophosphate, (2-(2-(2-methoxyethoxy)ethoxy)ethyl) dichlorophosphate, (2-(2-(2-(2-methoxyethoxy)ethoxy)ethoxy)ethyl) dichlorophosphate, methyl dibromophosphate, ethyl dibromophosphate, propyl dibromophosphate, isopropyl dibromophosphate, butyl dibromophosphate, pentyl dibromophosphate, hexyl dibromophosphate, heptyl dibromophosphate, (2,2,2-trifluoroethyl) dibromophosphate, (1,1,1,3,3,3-hexafluoroisopropyl) dibromophosphate, (2-methoxyethyl) dibromophosphate, (2-(2-methoxyethoxy)ethyl) dibromophosphate, (2-(2-(2-methoxyethoxy)ethoxy)ethyl) dibromophosphate, (2-(2-(2-(2-methoxyethoxy)ethoxy)ethoxy)ethyl) dibromophosphate, methyl diiodophosphate, ethyl diiodophosphate, propyl diiodophosphate, isopropyl diiodophosphate, butyl diiodophosphate, pentyl diiodophosphate, hexyl diiodophosphate, heptyl diiodophosphate, (2,2,2-trifluoroethyl) diiodophosphate, (1,1,1,3,3,3-hexafluoroisopropyl) diiodophosphate, (2-methoxyethyl) diiodophosphate, (2-(2-methoxyethoxy)ethyl) diiodophosphate, (2-(2-(2-methoxyethoxy)ethoxy)ethyl) diiodophosphate, (2-(2-(2-(2-methoxyethoxy)ethoxy)ethoxy)ethyl) diiodophosphate, methyl chlorofluorophosphate, ethyl chlorofluorophosphate, propyl chlorofluorophosphate, isopropyl chlorofluorophosphate, pentyl chlorofluorophosphate, hexyl chlorofluorophosphate, heptyl chlorofluorophosphate, (2,2,2-trifluoroethyl) chlorofluorophosphate, (1,1,1,3,3,3-hexafluoroisopropyl) chlorofluorophosphate, (2-methoxyethyl) chlorofluorophosphate, (2-(2-methoxyethoxy)ethyl) chlorofluorophosphate, (2-(2-(2-methoxyethoxy)ethoxy)ethyl) chlorofluorophosphate, (2-(2-(2-(2-methoxyethoxy)ethoxy)ethoxy)ethyl) chlorofluorophosphate, methyl bromochlorophosphate, ethyl bromofluorophosphate, propyl bromofluorophosphate, isopropyl bromofluorophosphate, pentyl bromofluorophosphate, hexyl bromofluorophosphate, heptyl bromofluorophosphate, (2,2,2-trifluoroethyl) bromofluorophosphate, (1,1,1,3,3,3-hexafluoroisopropyl) bromofluorophosphate, (2-methoxyethyl) bromofluorophosphate, (2-(2-methoxyethoxy)ethyl) bromofluorophosphate, (2-(2-(2-methoxyethoxy)ethoxy)ethyl) bromofluorophosphate, (2-(2-(2-(2-methoxyethoxy)ethoxy)ethoxy)ethyl) bromofluorophosphate, methyl fluoroiodophosphate, ethyl fluoroiodophosphate, propyl fluoroiodophosphate, isopropyl fluoroiodophosphate, pentyl fluoroiodophosphate, hexyl fluoroiodophosphate, heptyl fluoroiodophosphate, (2,2,2-trifluoroethyl) fluoroiodophosphate, (1,1,1,3,3,3-hexafluoroisopropyl) fluoroiodophosphate, (2-methoxyethyl) fluoroiodophosphate, (2-(2-methoxyethoxy)ethyl) fluoroiodophosphate, (2-(2-(2-methoxyethoxy)ethoxy)ethyl) fluoroiodophosphate, (2-(2-(2-(2-methoxyethoxy)ethoxy)ethoxy)ethyl) fluoroiodophosphate, methyl bromochlorophosphate, ethyl bromochlorophosphate, propyl bromochlorophosphate, isopropyl bromochlorophosphate, pentyl bromochlorophosphate, hexyl bromochlorophosphate, heptyl bromochlorophosphate, (2,2,2-trifluoroethyl) bromochlorophosphate, (1,1,1,3,3,3-hexafluoroisopropyl) bromochlorophosphate, (2-methoxyethyl) bromochlorophosphate, (2-(2-methoxyethoxy)ethyl) bromochlorophosphate, (2-(2-(2-methoxyethoxy)ethoxy)ethyl) bromochlorophosphate, (2-(2-(2-(2-methoxyethoxy)ethoxy)ethoxy)ethyl) bromochlorophosphate, methyl chloroiodophosphate, ethyl chloroiodophosphate, propyl chloroiodophosphate, isopropyl chloroiodophosphate, pentyl chloroiodophosphate, hexyl chloroiodophosphate, heptyl chloroiodophosphate, (2,2,2-trifluoroethyl) chloroiodophosphate, (1,1,1,3,3,3-hexafluoroisopropyl) chloroiodophosphate, (2-methoxyethyl) chloroiodophosphate, (2-(2-methoxyethoxy)ethyl) chloroiodophosphate, (2-(2-(2-methoxyethoxy)ethoxy)ethyl) chloroiodophosphate, (2-(2-(2-(2-methoxyethoxy)ethoxy)ethoxy)ethyl) chloroiodophosphate, trimethylsilyl difluorophosphate, trimethylsilyl dichlorophosphate, trimethylsilyl dibromophosphate, trimethylsilyl diiodophosphate, triethylsilyl difluorophosphate, triethylsilyl dichlorophosphate, triethylsilyl dibromophosphate, triethylsilyl diiodophosphate, dimethylphenylsilyl difluorophosphate, dimethylphenylsilyl dichlorophosphate, dimethylphenylsilyl dibromophosphate, dimethylphenylsilyl diiodophosphate, dimethylvinylsilyl difluorophosphate, dimethylvinylsilyl dichlorophosphate, dimethylvinylsilyl dibromophosphate, dimethylvinylsilyl diiodophosphate, trimethylsilyl fluorochlorophosphate, trimethylsilyl fluorobromophosphate, trimethylsilyl fluoroiodophosphate, triethylsilyl fluorochlorophosphate, triethylsilyl fluorobromophosphate, and triethylsilyl fluoroiodophosphate. These phosphoric acid esters can be used alone, or used in combination of two or more thereof.

Among the exemplified phosphoric acid esters represented by chemical formula (3), methyl dichlorophosphate, ethyl dichlorophosphate, methyl difluorophosphate and diethyl difluorophosphate are preferable, and methyl difluorophosphate and diethyl difluorophosphate are more preferable, from the viewpoint of easy availability and electrochemical stability.

The content of the phosphoric acid ester is 20 mass% or more, preferably 20 mass% or more and 95 mass% or less, more preferably 30 mass% or more and 80 mass% or less, and still more preferably 40 mass% or more and 70 mass% or less with respect to the total mass of the non-aqueous electrolytic solution. When the content of the phosphoric acid ester is in the above-mentioned ranges, good flame retardancy can be imparted to the non-aqueous electrolytic solution.

### [Other non-aqueous solvents]

The non-aqueous solvent may contain, in addition to the phosphoric acid ester, other non-aqueous solvents. The other non-aqueous solvent is not particularly limited, and examples thereof include cyclic carbonic acid esters, chain carbonic acid esters, cyclic ether, chain ether, lactone compounds, chain esters, nitrile compounds, amide compounds, sulfone compounds, and sulfoxide compounds. These other non-aqueous solvents can be used alone, or used in combination of two or more thereof. Among these other non-aqueous solvents, carbonic acid esters are preferable from the viewpoint of enabling general use as a non-aqueous solvent for secondary batteries.

The cyclic carbonic acid esters are not particularly limited, and examples thereof include ethylene carbonate, propylene carbonate, butylene carbonate and the like. These cyclic carbonic acid esters may be used alone or may be used as a mixture of two or more thereof.

The chain carbonic acid esters are not particularly limited, and examples thereof include dimethyl carbonate, ethyl methyl carbonate, diethyl carbonate and the like. These chain carbonic acid esters may be used alone or may be used as a mixture of two or more thereof.

The cyclic ethers are not particularly limited, and examples thereof include tetrahydrofuran, 2-methyl tetrahydrofuran and the like. These cyclic ethers may be used alone or may be used as a mixture of two or more thereof.

The chain ethers are not particularly limited, and examples thereof include dimethoxyethane, triethylene glycol dimethyl ether, tetraethylene glycol dimethyl ether and the like. These chain ethers may be used alone or may be used as a mixture of two or more thereof.

The lactone compounds are not particularly limited, and examples thereof include γ-butyrolactone and the like.

The chain esters are not particularly limited, and examples thereof include methyl propionate, methyl acetate, ethyl acetate, methyl formate and the like. These chain esters may be used alone or may be used as a mixture of two or more thereof.

The nitrile compounds are not particularly limited, and examples thereof include acetonitrile and the like.

The amide compounds are not particularly limited, and examples thereof include dimethylformamide and the like.

The sulfone compounds are not particularly limited, and examples thereof include sulfolane, methylsulfolane and the like. These sulfone compounds may be used alone or may be used as a mixture of two or more thereof.

As the other non-aqueous solvent, non-aqueous solvents in which at least a part of hydrogen atoms of a hydrocarbon group contained in the molecule is replaced with a fluorine atom can also be suitably used.

Among the exemplified other non-aqueous solvents, propylene carbonate, ethylene carbonate, γ-butyrolactone, dimethyl sulfoxide, and tetraethylene glycol dimethyl ether are preferable from the viewpoint of easy availability and improvement of performance of the secondary battery. From the viewpoint of improving the charge efficiency of the secondary battery, cyclic carbonates such as ethylene carbonate and propylene carbonate, and chain carbonic acid esters such as dimethyl carbonate and ethyl methyl carbonate are preferable.

### < Electrolyte >

### [Difluorophosphoric acid salt and nitric acid salt]

The electrolyte contains at least one of a difluorophosphoric acid salt and a nitric acid salt. The difluorophosphoric acid salt and the nitric acid salt are preferably soluble in the phosphoric acid ester. Here, in the present specification, the term "soluble" means that 0.05 g or more of the difluorophosphoric acid salt and/or nitric acid salt are dissolved in 100 g of a non-aqueous solvent at 25°C, for example.

From the viewpoint of solubility in a non-aqueous solvent and the characteristics of the secondary battery, difluorophosphoric acid salts and nitric acid salts having an alkali metal ion as a cation are preferable. Examples of the alkali metal ion include a lithium ion, a sodium ion, a potassium ion, a rubidium ion, and a cesium ion. Among these alkali metal ions, a lithium ion, a sodium ion and a potassium ion are preferable from the viewpoint of the characteristics of the secondary battery and resource considerations.

The concentration of the electrolyte with respect to the non-aqueous solvent is preferably in the range of 0.1 M to 4 M, more preferably in the range of 0.2 M to 1.5 M, and still more preferably in the range of 0.5 M to 1.2 M. When the concentration of the electrolyte is 0.1 M or more, the electrical conductivity of the non-aqueous electrolytic solution becomes insufficient, so that it is possible to prevent deterioration of electrical resistance characteristics. On the other hand, when the concentration of the electrolyte is 4 M or less, the solubility in the non-aqueous solvent of the electrolyte can be prevented from reaching saturation. As a result, it is possible to prevent increasing the viscosity of the non-aqueous electrolytic solution, resulting in deterioration of handleability of the non-aqueous electrolytic solution and electrical resistance characteristics of the secondary battery.

The mole fraction of the difluorophosphoric acid salt and/or nitric acid salt is preferably 0.1 or more, more preferably 0.1 or more and 1.0 or less, still more preferably 0.2 or more and 0.8 or less, and particularly preferably 0.3 or more and 0.5 or less with respect to the total number of moles of the electrolyte. When the mole fraction of the difluorophosphoric acid salt and/or nitric acid salt is 0.1 or more, the cycle characteristics and the electrical resistance characteristics of the secondary battery can be further improved.

### [Other electrolytes]

As described above, in the electrolyte, an electrolyte other than the difluorophosphoric acid salt and the nitric acid salt can be used in combination. The other electrolyte is not limited, and examples thereof include electrolytes having an anion such as PF₆⁻, CF₃SO₃⁻, C₂F₅SO₃⁻, C₃F₇SO₃⁻, C₄F₉SO³⁻; N(SO₂F)₂⁻, N(CF₃SO₂)₂⁻, N(C₂F₅SO₂)₂⁻, N(CF₃SO₂)(CF₃CO)⁻, N(CF₃SO₂)(C₂F₅SO₂)⁻ or C(CF₃SO₂)₃⁻, boron complex salts, phosphorus complex salts, Lewis acid complex salts, and phosphoric acid ester salts. These other electrolytes can be used alone, or used in combination of two or more thereof. Other electrolytes will be described in more detail below. The mole fraction of the other electrolyte is preferably 0.1 or more and 0.9 or less, more preferably 0.2 or more and 0.8 or less, and still more preferably 0.3 or more and 0.5 or less with respect to the total number of moles of the electrolyte. When the mole fraction of the other electrolyte is within the above-mentioned ranges, the cycle characteristics and the electrical resistance characteristics of the secondary battery can be further improved.

### 1. Boron complex salt

The boron complex salt is specifically represented by the following chemical formula (4).

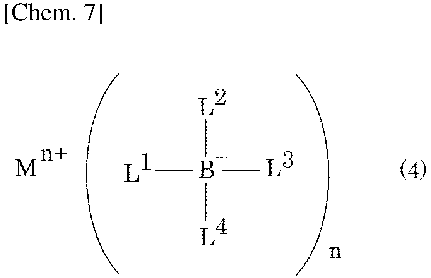

In the chemical formula (4), Mⁿ⁺ represents one selected from the group consisting of an alkali metal ion, an alkaline earth metal ion, an aluminum ion, a transition metal ion and an onium ion.

The alkali metal ion in chemical formula (4) is not limited, and include a lithium ion, a sodium ion, a potassium ion, a rubidium ion, and a cesium ion. These alkali metal ions can be used alone, or used in combination of two or more thereof.

Examples of the alkaline earth metal ion in chemical formula (4) include a magnesium ion, a calcium ion, a strontium ion, and a barium ion. These alkaline earth metal ions can be used alone, or used in combination of two or more thereof.

The transition metal ion in chemical formula (4) is not limited, and examples thereof include a manganese ion, a cobalt ion, a nickel ion, a chromium ion, a copper ion, a silver ion, a molybdenum ion, a tungsten ion, and a vanadium ion. These transition metal ions can be used alone, or used in combination of two or more thereof.

Examples of the onium ion in chemical formula (4) include an ammonium ion (NH⁴⁺), a primary ammonium ion, a secondary ammonium ion, a tertiary ammonium ion, a quaternary ammonium ion, a quaternary phosphonium ion, and a sulfonium ion.

The primary ammonium ion is not particularly limited, and examples thereof include a methylammonium ion, an ethylammonium ion, a propylammonium ion, an isopropylammonium ion and the like. These primary ammonium ions may be used alone or may be used in combination of two kinds or more thereof.

The secondary ammonium ion is not particularly limited, and examples thereof include a dimethylammonium ion, a diethylammonium ion, a dipropylammonium ion, a dibutylammonium ion, an ethylmethylammonium ion, a methyl propyl ammonium ion, a methyl butyl ammonium ion, a propyl butyl ammonium ion, a diisopropylammonium ion and the like. These secondary ammonium ions may be used alone or may be used in combination of two kinds or more thereof.

The tertiary ammonium ion is not particularly limited, and examples thereof include a trimethylammonium ion, a triethylammonium ion, a tripropylammonium ion, a tributylammonium ion, an ethyl dimethyl ammonium ion, a diethylmethylammonium ion, a triisopropylammonium ion, a dimethyl isopropyl ammonium ion, a diethyl isopropyl ammonium ion, a dimethyl propyl ammonium ion, a butyl dimethyl ammonium ion, a 1-methylpyrrolidinium ion, a 1-ethylpyrrolidinium ion, a 1-propylpyrrolidinium ion, a 1-butylpropylpyrrolidinium ion, a 1-methylimidazolium ion, a 1-ethylimidazolium ion, a 1-propylimidazolium ion, a 1-butylimidazolium ion, a pyrazolium ion, a 1-methylpyrazolium ion, a 1-ethylpyrazolium ion, a 1-propylpyrazolium ion, a 1-butylpyrazolium ion, a pyridinium ion and the like. These tertiary ammonium ions may be used alone or may be used in combination of two kinds or more thereof.

Quaternary ammonium to form the quaternary ammonium ion is not particularly limited, and examples thereof include aliphatic quaternary ammoniums, imidazoliums, pyridiniums, pyrazoliums, pyridaziniums and the like. These quaternary ammonium ions may be used alone or may be used in combination of two kinds or more thereof.

Moreover, the aliphatic quaternary ammoniums are not particularly limited, and examples thereof include tetraethylammonium, tetrapropylammonium, tetraisopropylammonium, trimethyl ethyl ammonium, dimethyl diethyl ammonium, methyl triethyl ammonium, trimethyl propyl ammonium, trimethyl isopropyl ammonium, tetrabutylammonium, trimethyl butyl ammonium, trimethyl pentyl ammonium, trimethyl hexyl ammonium, 1-ethyl-1-methyl-pyrrolidinium, 1-butyl-1-methylpyrrolidinium, 1-ethyl-1-methylpiperidinium, 1-butyl-1-methylpiperidinium and the like. These aliphatic quaternary ammonium ions may be used alone or may be used in combination of two kinds or more thereof.

The imidazoliums are not particularly limited, and examples thereof include 1,3-dimethyl-imidazolium, 1-ethyl-3-methylimidazolium, 1-n-propyl-3-methylimidazolium, 1-n-butyl-3-methylimidazolium, 1-n-hexyl-3-methylimidazolium and the like. These imidazoliums may be used alone or may be used in combination of two kinds or more thereof.

The pyridiniums are not particularly limited, and examples thereof include 1-methylpyridinium, 1-ethylpyridinium, 1-n-propylpyridinium and the like. These pyridiniums may be used alone or may be used in combination of two kinds or more thereof.

The pyrazoliums are not particularly limited, and examples thereof include 1,2-dimethylpyrazolium, 1-methyl-2-ethylpyrazolium, 1-propyl-2-methylpyrazolium, 1-methyl-2-butylpyrazolium, 1-methylpyrazolium, 3-methylpyrazolium, 4-methylpyrazolium, 4-iodopyrazolium, 4-bromopyrazolium, 4-iodo-3-methylpyrazolium, 4-bromo-3-methylpyrazolium and 3-trifluoromethylpyrazolium. These pyrazoliums may be used alone or may be used in combination of two kinds or more thereof.

The pyridaziniums are not particularly limited, and examples thereof include 1-methylpyridazinium, 1-ethylpyridazinium, 1-propylpyridazinium, 1-butylpyridazinium, 3-methylpyridazinium, 4-methylpyridazinium, 3-methoxypyridazinium, 3,6-dichloropyridazinium, 3,6-dichloro-4-methylpyridazinium, 3-chloro-6-methylpyridazinium and 3-chloro-6-methoxypyridazinium. These pyridaziniums may be used alone or may be used in combination of two kinds or more thereof.

Quaternary phosphonium to form the quaternary phosphonium ion is not particularly limited, and examples thereof include benzyltriphenylphosphonium, tetraethylphosphonium, tetraphenylphosphonium and the like. These phosphoniums may be used alone or may be used in combination of two kinds or more thereof.

The sulfonium to form the sulfonium ion is not particularly limited, and examples thereof include trimethylsulfonium, triphenylsulfonium, triethylsulfonium and the like. These sulfoniums may be used alone or may be used in combination of two kinds or more thereof.

Among the ions as described as an exemplification of the Mⁿ⁺, lithium ions, sodium ions, potassium ions, magnesium ions, calcium ions, tetraalkylammonium ions, alkyl imidazolium ions, alkyl pyrrolidinium ions, alkyl pyridinium ions and like are preferred from the viewpoint of ease of availability.

In the chemical formula (4), L¹ to L⁴ are each independent, and arbitrarily selected one or two combinations thereof form a cyclic structure of -OOC-COO-, - OOC-O-, -OOC-α-COO-, -O-α-O-, or -OOC-α-O-. Herein, α represents a hydrocarbon group having 1 to 20 carbon atoms, preferably 1 to 10 carbon atoms, more preferably 1 to 5 carbon atoms; or a hydrocarbon group having 1 to 20 carbon atoms, preferably 1 to 10 carbon atoms, more preferably 1 to 5 carbon atoms and a heteroatom, an unsaturated bond or a cyclic structure. When groups L¹ to L⁴ have two sets of one of the cyclic structures of -OOC-α-COO-, -O-α-O- and -OOC-α-O-, α of the cyclic structures may be different. Here, the heteroatom means an oxygen atom, a nitrogen atom or a sulfur atom.

The α is not particularly limited, and examples thereof include a linear alkylene group such as a methylene group, an ethylene group, a propylene group, a butylene group, a pentylene group, a hexylene group, a heptylene group, an octylene group and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and a cyclic hydrocarbon group, such as a cyclohexylene group, a phenylene group, a benzylene group, a naphthylene group, an anthracylene group, a naphthacylene group and a pentacylene group; and a part or all thereof substituted with halogen atoms.

Further, when the α is a 1,2-phenylene group, -O-α-O- denotes a benzenediolate group, and -O-α-COO- denotes a salicylate group.

In the chemical formula (4), L¹ to L⁴ may be each independently a halogen atom, an alkyl group having 1 to 20 carbon atoms, preferably 1 to 10 carbon atoms, more preferably 1 to 5 carbon atoms; an alkoxy group having 1 to 20 carbon atoms, preferably 1 to 10 carbon atoms, more preferably 1 to 5 carbon atoms; an alkyl group having 1 to 20 carbon atoms, preferably 1 to 10 carbon atoms, more preferably 1 to 5 carbon atoms and at least one of a halogen atom, a heteroatom, an unsaturated bond and a cyclic structure; or an alkoxy group having 1 to 20 carbon atoms, preferably 1 to 10 carbon atoms, more preferably 1 to 5 carbon atoms and at least one of a halogen atom, a heteroatom, an unsaturated bond and a cyclic structure. Here, the halogen atom means a fluorine atom, a chlorine atom, a bromine atom or an iodine atom. The heteroatom means an oxygen atom, a nitrogen atom or a sulfur atom.

Specifically, each of L¹ to L⁴ is, for example, a chain alkyl group such as a methyl group, an ethyl group, a propyl group, a butyl group, an isopropyl group, a pentyl group, a hexyl group, a heptyl group or an octyl group; a cyclic alkyl group such as a cyclopentyl group or a cyclohexyl group; a halogen-containing chain alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group or a 1, 1, 1,3,3,3-hexafluoro-2-propyl group; a halogen-containing cyclic alkyl group such as a 2-iodocyclohexyl group, a 2-bromocyclohexyl group, a 2-chlorocyclohexyl group or a 2-fluorocyclohexyl group; a chain alkenyl group such as a 2-propenyl group, an isopropenyl group, a 2-butenyl group or a 3-butenyl group; a cyclic alkenyl group such as a 2-cyclopentenyl group, a 2-cyclohexenyl group or a 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group or a 4-pentynyl group; an aryl group such as a phenyl group, a 3-methoxyphenyl group, a 4-methoxyphenyl group, a 3,5-dimethoxyphenyl group or a 4-phenoxyphenyl group; a halogen-containing phenyl group such as a 2-iodophenyl group, a 2-bromophenyl group, a 2-chlorophenyl group, a 2-fluo rophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group or a 3,5-difluorophenyl group; a chain alkoxy group such as a methoxy group, an ethoxy group, a propoxy group, a butoxy group, a pentoxy group or a hexoxy group; a cyclic alkoxy group such as a cyclopentoxy group or a cyclohexoxy group; a halogen-containing chain alkyl group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichlorotoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group or a 1,1,1,3,3,3-hexafluoro-2-propoxy group; a halogen-containing cyclic alkyl group such as a 2-iodocyclohexoxy group, a 2-bromocyclohexoxy group, a 2-chlorocyclohexoxy group or a 2-fluorocyclohexoxy group; a chain alkenylalkoxy group such as a 2-propenoxy group, an isopropenoxy group, a 2-butenoxy group or a 3-butenoxy group; a cyclic alkenylalkoxy group such as a 2-cyclopentenoxy group, a 2-cyclohexenoxy group or a 3-cyclohexenoxy group; a chain alkynylalkoxy group such as a 2-propynoxy group, a 1-butynoxy group, a 2-butynoxy group, a 3-butynoxy group, a 1-pentinoxy group, a 2-pentinoxy group, a 3-pentinoxy group or a 4-pentinoxy group; an aryloxy group such as a phenoxy group, a 3-methylphenoxy group, a 4-methylphenoxy group or a 3,5-dimethylphenoxy group; or a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group or a 3,5-difluorophenoxy group.

The L¹ to L⁴ are mutually independent, and may be the same or different. The group of functional groups exemplified above is merely an example, and the present invention is not limited thereto.

In the chemical formula (4), n represents a valence. For example, n is 1 when M is a monovalent cation, n is 2 when M is a divalent cation, and n is 3 when M is a trivalent cation.

Specific examples of the boron complex salt represented by the chemical formula (4) include bisoxalatoborate, bismalonatoborate, bissalicylate borate, bis[1,2'-benziolate(2)-O,O']borate, oxalatomalonatoborate, oxalatosalicylate borate, oxalato[1,2'-benziolate(2)-O,O']borate, diiodooxalatoborate, dibromooxalatoborate, dichlorooxalatoborate, difluorooxalatoborate, iodochlorooxalatoborate, iodobromoxalatoborate, iodofluorooxalatoborate, bromochlorooxalato borate, bromofluorooxalatoborate, chlorofluorooxalatoborate, diiodomalonatoborate, dibromomalonatoborate, dichloromalonatoborate, difluoromalonatoborate, iodochloromalonatoborate, iodobromomalonatoborate, iodofluoromalonatoborate, bromochloromalonatoborate, bromofluoromalonatoborate, chlorofluoromalonatoborate, diiodosalicylate borate, dibromosalicylate borate, dichlorosalicylate borate, difluorosalicylate borate, iodochlorosalicylate borate, iodobromosalicylate borate, iodofluorosalicylate borate, bromochlorosalicylate borate, bromofluorosalicylate borate, chlorofluorosalicylate borate, diiodo[1,2'-benziolate(2)-O,O']borate, dibromo[1,2'-benziolate(2)-O,O']borate, dichloro[1,2'-benziolate(2)-O,O']borate, difluoro[1,2'-benziolate(2)-O,O']borate, iodochloro[1,2'-benziolate(2)-O,O']borate, iodobromo[1,2'-benziolate(2)-O,O']borate, iodofluoro[1,2'-benziolate(2)-O,O']borate, bromochloro[1,2'-benziolate(2)-O,O']borate, bromofluoro[1,2'-benziolate(2)-O,O']borate, chlorofluoro[1,2'-benziolate(2)-O,O']borate, tetraiodoborate, tetrabromoborate, tetrachloroborate, tetrafluoroborate, iodotribromoborates, iodotrichloroborate, iodotrifluoroborate, diiododibromoborate, diiododichloroborate, diiododifluoroborate, triiodobromoborate, triiodochloroborate, triiodofluoroborate, bromotrichloroborate, bromotrifluoroborate, dibromodichloroborate, dibromodifluoroborate, tribromochloroborate, tribromofluoroborate, chlorotrifluoroborate, dichlorodifluoroborate, iiodobromochlorofluoroborate, tetramethylborate, tetraethylborate, tetraphenylborate, tetramethoxyborate, tetraethoxyborate, tetraphenoxyborate, ethyldimethylphenylborate, butylethylmethylphenylborate, ethoxydimethoxyphenoxyborate, dimethyloxalatoborate, dimethylmalonatoborate, dimethylsalicylatoborate, dimethyl[1,2'-benziolate(2)-O,O']borate, ethylmethyloxalatoborate, phenylmethyloxalatoborate, iodomethyloxalatoborate, bromomethyloxalatoborate, chloromethyloxalatoborate, fluoromethyloxalatoborate, iodoethyloxalatoborate, bromoethyloxalatoborate, chloroethyloxalatoborate, fluoroethyloxalatoborate, ethoxymethoxyoxalatoborate, iodomethoxyoxalatoborate, bromomethoxyoxalatoborate, chloromethoxyoxalatoborate, and fluoromethoxyoxalatoborate.

Among the exemplified boron complex salts, boron complex salts having a boron complex anion of bisoxalatoborate, bissalicylate borate or bis[1,2'-benziolate(2)-O,O']borate are preferable from the viewpoint of easy availability.

The above-described specific boron complex salts represented by chemical formula (4) are merely an example, and the present embodiment is not limited thereto.

### 2. Phosphorus complex salt

The phosphorus complex salt is specifically represented by the following chemical formula (5).

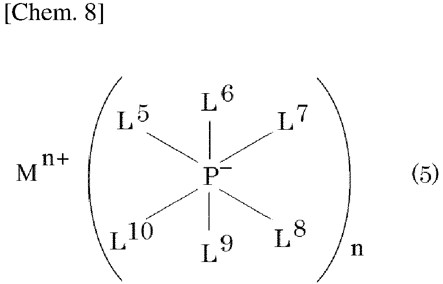

In the chemical formula (5), Mⁿ⁺ and the valence n are the same as defined in the chemical formula (4). Therefore, detailed descriptions thereof will be omitted.

In the chemical formula (5), L⁵ to L¹⁰ are each independent, and at least one arbitrarily selected combination thereof forms a cyclic structure of -OOC-COO-, -OOC-O-, -OOC-β-COO-, -O-β-O-, or -OOC-β-O-. Herein, β represents a hydrocarbon group having 1 to 20 carbon atoms, preferably 1 to 10 carbon atoms, more preferably 1 to 5 carbon atoms; or a hydrocarbon group having 1 to 20 carbon atoms, preferably 1 to 10 carbon atoms, more preferably 1 to 5 carbon atoms and a heteroatom, an unsaturated bond or a cyclic structure. When groups L⁵ to L¹⁰ have two or more sets of one of the cyclic structures of -OOC-β-COO-, -O-β-O- and -OOC-β-O-, β of the cyclic structures may be different. Here, the heteroatom means an oxygen atom, a nitrogen atom or a sulfur atom.

β is not particularly limited, and examples thereof include a linear alkylene group such as a methylene group, an ethylene group, a propylene group, a butylene group, a pentylene group, a hexylene group, a heptylene group, an octylene group and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and a cyclic hydrocarbon group, such as a cyclohexylene group, a phenylene group, a benzylene group, a naphthylene group, an anthracylene group, a naphthacylene group and a pentacylene group, and a part or all thereof substituted with halogens.

Further, when β is a 1,2-phenylene group, -O-β-O- denotes a benzenediolate group, and -O-β-COO- denotes a salicylate group.

In the chemical formula (5), L⁵ to L¹⁰ may each independently represent a halogen atom; an alkyl group; an alkoxy group; an alkylthio group; an alkyl group having at least one of a halogen atom, a heteroatom and an unsaturated bond (hereinafter, referred to as an "alkyl group having a halogen atom or the like"); an alkoxy group having at least one of a halogen atom, a heteroatom and an unsaturated bond (hereinafter, referred to as an "alkoxy group having a halogen atom or the like"); or an alkylthio group having at least one of a halogen atom, a heteroatom and an unsaturated bond (hereinafter, referred to as an "alkylthio group having a halogen atom or the like"). The number of carbon atoms in the alkyl group, the alkoxy group, the alkylthio group, the alkyl group having a halogen atom or the like, the alkoxy group having a halogen atom or the like, and the alkylthio group having a halogen atom or the like is in the range of 1 to 20, and is preferably 1 to 10, and more preferably 1 to 4. The number of unsaturated bonds is preferably in the range of 1 to 10, more preferably in the range of 1 to 5, and particularly preferably in the range of 1 to 3.

The halogen atom and the heteroatom are the same as defined in the chemical formula (4). In the alkyl group having a halogen atom or the like, the alkoxy group having a halogen atom or the like, and the alkylthio group having a halogen atom or the like, the halogen atom and heteroatom may be such that a part or all of hydrogen in these functional groups is replaced with any of the above-described halogen atoms and/or heteroatoms.

Specifically, each of L⁵ to L¹⁰ is, for example, a chain alkyl group such as a methyl group, an ethyl group, a propyl group, a butyl group, an isopropyl group, a pentyl group, a hexyl group, a heptyl group or an octyl group; a cyclic alkyl group such as a cyclopentyl group or a cyclohexyl group; a halogen-containing chain alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group or a hexafluoro-2-propyl group; a halogen-containing cyclic alkyl group such as a 2-iodocyclohexyl group, a 2-bromocyclohexyl group, a 2-chlorocyclohexyl group or a 2-fluorocyclohexyl group; a chain alkenyl group such as a 2-propenyl group, an isopropenyl group, a 2-butenyl group or a 3-butenyl group; a cyclic alkenyl group such as a 2-cyclopentenyl group, a 2-cyclohexenyl group or a 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group or a 4-pentynyl group; an aryl group such as a phenyl group, a 3-methoxyphenyl group, a 4-methoxyphenyl group, a 3,5-dimethoxyphenyl group or a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group or a 3,5-difluorophenyl group; a chain alkoxy group such as a methoxy group, an ethoxy group, a propoxy group, a butoxy group, a pentoxy group or a hexoxy group; a cyclic alkoxy group such as a cyclopentoxy group or a cyclohexoxy group; a halogen-containing chain alkoxy group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroetoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group or a hexafluoro-2-propoxy group; a halogen-containing cyclic alkoxy group such as a 2-iodocyclohexoxy group, a 2-bromocyclohexoxy group, a 2-chlorocyclohexoxy group or a 2-fluorocyclohexoxy group; a chain alkenylalkoxy group such as a 2-propenoxy group, an isopropenoxy group, a 2-butenoxy group or a 3-butenoxy group; a cyclic alkenylalkoxy group such as a 2-cyclopentenoxy group, a 2-cyclohexenoxy group or a 3-cyclohexenoxy group; a chain alkynylalkoxy group such as a 2-propynoxy group, a 1-butynoxy group, a 2-butynoxy group, a 3-butynoxy group, a 1-pentinoxy group, a 2-pentinoxy group, a 3-pentinoxy group or a 4-pentinoxy group; an aryloxy group such as a phenoxy group, a 3-methylphenoxy group, a 4-methylphenoxy group or a 3,5-dimethylphenoxy group; or a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group or a 3,5-difluorophenoxy group, an alkylthio group such as a methylthio group, an ethylthio group, a propylthio group, a butylthio group, an iopropylthio group, a pentylthio group or a hexylthio group.

Examples of the phosphorus compound represented by the chemical formula (5) include lithium difluorobisoxalate phosphate, sodium difluorobisoxalate phosphate, lithium tetrafluorooxalate phosphate, and sodium tetrafluorooxalate phosphate, which are easily available.

### 3. Lewis acid complex salt

The Lewis acid complex anion in the Lewis acid complex salt is composed of an inorganic anion or an organic anion and a Lewis acid such as BF₃, PF₅ or AlF₃.

The inorganic anion is not limited, and examples thereof include a carbonate anion, a sulfate anion, a fluorosulfate anion, a chlorosulfate anion, a bromosulfate anion, an iodosulfate anion, a phosphate anion, a monofluorophosphate anion, a monochlorophosphate anion, a monobromophosphate anion, a monoiodophosphate anion, a difluorophosphate anion, a dichlorophosphate anion, a dibromophosphate anion, and a diiodophosphate anion.

The organic anion is not limited, and examples thereof include organic carboxylate anions, organic sulfonate anions, and organic phosphate anions. The organic carboxylate anion is not limited, and examples thereof include a formate anion, an acetate anion, a propionate anion, a butyrate anion, a valerate anion, a trifluoroacetate anion, a pentafluoropropionate anion, a heptafluorobutyrate anion, and a nonafluorovalerate anion. The organic sulfonate anion is not limited, and examples thereof include a methanesulfonate anion, an ethanesulfonate anion, propanesulfonic acid, a butanesulfonate anion, a trifluoromethanesulfonate anion, a pentafluoroethanesulfonate anion, a heptafluoropropanesulfonate anion, and a nonafluorobutanesulfonate anion. The organic phosphate anion is not limited, and examples thereof include an octyl phosphate anion, a dodecyl phosphate anion, an octadecyl phosphate anion, a phenyl phosphate anion, and a nonyl phenyl phosphate anion.

The Lewis acid for forming the Lewis acid complex salt is not limited, and examples thereof include compounds of the following formulae (6) to (8).

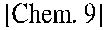

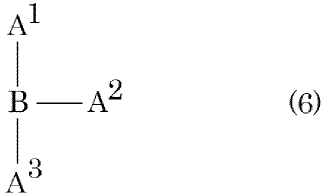

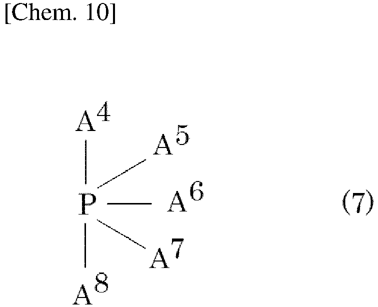

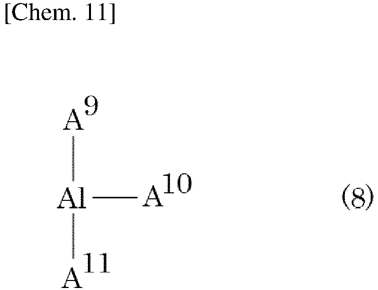

In the chemical formula (6), A¹ to A³ each independently represent a hydrogen atom, a halogen atom; an alkyl group; an alkoxy group; an alkylthio group; an alkyl group having at least one of a halogen atom, a heteroatom and an unsaturated bond (hereinafter, referred to as an "alkyl group having a halogen atom or the like"); an alkoxy group having at least one of a halogen atom, a heteroatom and an unsaturated bond (hereinafter, referred to as an "alkoxy group having a halogen atom or the like"); or an alkylthio group having at least one of a halogen atom, a heteroatom and an unsaturated bond (hereinafter, referred to as an "alkylthio group having a halogen atom or the like"). The number of carbon atoms in the alkyl group, the alkoxy group, the alkylthio group, the alkyl group having a halogen atom or the like, the alkoxy group having a halogen atom or the like, and the alkylthio group having a halogen atom or the like is in the range of 1 to 20, and is preferably 1 to 10, and more preferably 1 to 4. The number of unsaturated bonds is preferably in the range of 1 to 10, more preferably in the range of 1 to 5, and particularly preferably in the range of 1 to 3.

Specific examples of the above-mentioned A¹ to A³ include a chain alkyl group such as a methyl group, an ethyl group, a propyl group, a butyl group, an isopropyl group, a pentyl group, a hexyl group, a heptyl group and an octyl group; a cyclic alkyl group such as a cyclopentyl group and a cyclohexyl group; a halogen-containing chain alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; a halogen-containing cyclic alkyl group such as a 2-iodocyclohexyl group, a 2-bromocyclohexyl group, a 2-chlorocyclohexyl group and a 2-fluorocyclohexyl group; a chain alkenyl group such as a 2-propenyl group, an isopropenyl group, a 2-butenyl group and a 3-butenyl group; a cyclic alkenyl group such as a 2-cyclopentenyl group, a 2-cyclohexenyl group and 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group and 4-pentynyl group; an aryl group such as a phenyl group, a 3-methoxyphenyl group, a 4-methoxyphenyl group, a 3,5-dimethoxyphenyl group and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; a chain alkoxy group such as a methoxy group, an ethoxy group, a propoxy group, a butoxy group, a pentoxy group and a hexoxy group; a cyclic alkoxy group such as a cyclopentoxy group and a cyclohexoxy group; a halogen-containing chain alkoxy group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; a halogen-containing cyclic alkoxy group such as a 2-iodocyclohexoxy group, a 2-bromocyclohexoxy group, a 2-chlorocyclohexoxy group and a 2-fluorocyclohexoxy group; a chain alkenylalkoxy group such as a 2-propenoxy group, an isopropenoxy group, a 2-butenoxy group and a 3-butenoxy group; a cyclic alkenylalkoxy group such as a 2-cyclopentenoxy group, a 2-cyclohexenoxy group and a 3-cyclohexenoxy group; a chain alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group and a 4-pentynoxy group; an aryloxy group such as a phenoxy group, a 3-methylphenoxy group, a 4-methylphenoxy group and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and an alkylthio group such as a methylthio group, an ethylthio group, a propylthio group, a butylthio group, an isopropylthio group, a pentylthio group and a hexylthio group.

In the chemical formula (7), A⁴ to A⁸ each independently represent a hydrogen atom, a halogen atom; an alkyl group; an alkoxy group; an alkylthio group; an alkyl group having at least one of a halogen atom, a heteroatom and an unsaturated bond (hereinafter, referred to as an "alkyl group having a halogen atom or the like"); an alkoxy group having at least one of a halogen atom, a heteroatom and an unsaturated bond (hereinafter, referred to as an "alkoxy group having a halogen atom or the like"); or an alkylthio group having at least one of a halogen atom, a heteroatom and an unsaturated bond (hereinafter, referred to as an "alkylthio group having a halogen atom or the like"). The number of carbon atoms in the alkyl group, the alkoxy group, the alkylthio group, the alkyl group having a halogen atom or the like, the alkoxy group having a halogen atom or the like, and the alkylthio group having a halogen atom or the like is in the range of 1 to 20, and is preferably 1 to 10, and more preferably 1 to 4. The number of unsaturated bonds is preferably in the range of 1 to 10, more preferably in the range of 1 to 5, and particularly preferably in the range of 1 to 3.

Specific examples of the above-mentioned A⁴ to A⁸ include a chain alkyl group such as a methyl group, an ethyl group, a propyl group, a butyl group, an isopropyl group, a pentyl group, a hexyl group, a heptyl group and an octyl group; a cyclic alkyl group such as a cyclopentyl group and a cyclohexyl group; a halogen-containing chain alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; a halogen-containing cyclic alkoxy group such as a 2-iodocyclohexyl group, a 2-bromocyclohexyl group, a 2-chlorocyclohexyl group and a 2-fluorocyclohexyl group; a chain alkenyl group such as a 2-propenyl group, an isopropenyl group, a 2-butenyl group and a 3-butenyl group; a cyclic alkenyl group such as a 2-cyclopentenyl group, a 2-cyclohexenyl group and 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group and 4-pentynyl group; an aryl group such as a phenyl group, a 3-methoxyphenyl group, a 4-methoxyphenyl group, a 3,5-dimethoxyphenyl group and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; a chain alkoxy group such as a methoxy group, an ethoxy group, a propoxy group, a butoxy group, a pentoxy group and a hexoxy group; a cyclic alkoxy group such as a cyclopentoxy group and a cyclohexoxy group; a halogen-containing chain alkoxy group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; a halogen-containing cyclic alkoxy group such as a 2-iodocyclohexoxy group, a 2-bromocyclohexoxy group, a 2-chlorocyclohexoxy group and a 2-fluorocyclohexoxy group; a chain alkenylalkoxy group such as a 2-propenoxy group, an isopropenoxy group, a 2-butenoxy group and a 3-butenoxy group; a cyclic alkenylalkoxy group such as a 2-cyclopentenoxy group, a 2-cyclohexenoxy group and a 3-cyclohexenoxy group; a chain alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group and a 4-pentynoxy group; an aryloxy group such as a phenoxy group, a 3-methylphenoxy group, a 4-methylphenoxy group and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and an alkylthio group such as a methylthio group, an ethylthio group, a propylthio group, a butylthio group, an isopropylthio group, a pentylthio group and a hexylthio group.

In the chemical formula (8), A⁹ to A¹¹ each independently represent a hydrogen atom, a halogen atom; an alkyl group; an alkoxy group; an alkylthio group; an alkyl group having at least one of a halogen atom, a heteroatom and an unsaturated bond (hereinafter, referred to as an "alkyl group having a halogen atom or the like"); an alkoxy group having at least one of a halogen atom, a heteroatom and an unsaturated bond (hereinafter, referred to as an "alkoxy group having a halogen atom or the like"); or an alkylthio group having at least one of a halogen atom, a heteroatom and an unsaturated bond (hereinafter, referred to as an "alkylthio group having a halogen atom or the like"). The number of carbon atoms in the alkyl group, the alkoxy group, the alkylthio group, the alkyl group having a halogen atom or the like, the alkoxy group having a halogen atom or the like, and the alkylthio group having a halogen atom or the like is in the range of 1 to 20, and is preferably 1 to 10, and more preferably 1 to 4. The number of unsaturated bonds is preferably in the range of 1 to 10, more preferably in the range of 1 to 5, and particularly preferably in the range of 1 to 3.

Specific examples of the above-mentioned A⁹ to A¹¹ include a chain alkyl group such as a methyl group, an ethyl group, a propyl group, a butyl group, an isopropyl group, a pentyl group, a hexyl group, a heptyl group and an octyl group; a cyclic alkyl group such as a cyclopentyl group and a cyclohexyl group; a halogen-containing chain alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; a halogen-containing cyclic alkyl group such as a 2-iodocyclohexyl group, a 2-bromocyclohexyl group, a 2-chlorocyclohexyl group and a 2-fluorocyclohexyl group; a chain alkenyl group such as a 2-propenyl group, an isopropenyl group, a 2-butenyl group and a 3-butenyl group; a cyclic alkenyl group such as a 2-cyclopentenyl group, a 2-cyclohexenyl group and 3-cyclohexenyl group; chain alkynyl groups such as a 2-propynyl group, a 1-butynyl group, a 2-butynyl group, a 3-butynyl group, a 1-pentynyl group, a 2-pentynyl group, a 3-pentynyl group and 4-pentynyl group; an aryl group such as a phenyl group, a 3-methoxyphenyl group, a 4-methoxyphenyl group, a 3,5-dimethoxyphenyl group and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; a chain alkoxy group such as a methoxy group, an ethoxy group, a propoxy group, a butoxy group, a pentoxy group and a hexoxy group; a cyclic alkoxy group such as a cyclopentoxy group and a cyclohexoxy group; a halogen-containing chain alkoxy group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichloroethoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group and a hexafluoro-2-propoxy group; a halogen-containing cyclic alkoxy group such as a 2-iodocyclohexoxy group, a 2-bromocyclohexoxy group, a 2-chlorocyclohexoxy group and a 2-fluorocyclohexoxy group; a chain alkenylalkoxy group such as a 2-propenoxy group, an isopropenoxy group, a 2-butenoxy group and a 3-butenoxy group; a cyclic alkenylalkoxy group such as a 2-cyclopentenoxy group, a 2-cyclohexenoxy group and a 3-cyclohexenoxy group; a chain alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group and a 4-pentynoxy group; an aryloxy group such as a phenoxy group, a 3-methylphenoxy group, a 4-methylphenoxy group and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3.5-diiodophenoxy group, a 3,5-dibromophenoxy group, a 3,5-dichlorophenoxy group and a 3,5-difluorophenoxy group; and an alkylthio group such as a methylthio group, an ethylthio group, a propylthio group, a butylthio group, an isopropylthio group, a pentylthio group and a hexylthio group.

Specific examples of the Lewis acids of chemical formulae (6) to (8) include BF₃, PF₅, AlF₃ and AlCl₃. It is preferable that the Lewis acids of chemical formulae (6) to (8) contain a halogen element in the chemical structure from the viewpoint of developing stronger Lewis acidity. Specific examples of such a Lewis acid include BF₃, PF₅ and AlCl₃.

As in the case of the boron complex salt, the cation in the Lewis acid complex salt is one selected from the group consisting of an alkali metal ion, an alkaline earth metal ion, an aluminum ion, a transition metal ion and an onium ion. Therefore, detailed descriptions thereof will be omitted.

### 4. Phosphoric acid ester salt

The phosphoric acid ester salt is specifically represented by the following chemical formula (9).

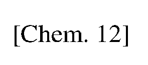

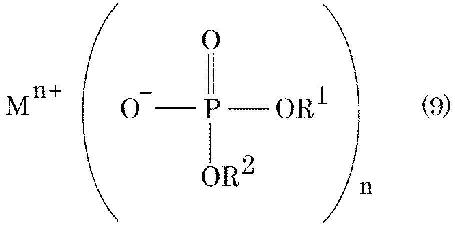

In the chemical formula (9), Mⁿ⁺ and the valence n are the same as defined in the chemical formula (4). Therefore, detailed descriptions thereof will be omitted.

In the chemical formula (9), R¹ and R² each independently represent a hydrocarbon group having 1 to 20 carbon atoms; or a hydrocarbon group having 1 to 20 carbon atoms and at least one of a halogen atom, a heteroatom and an unsaturated bond. Alternatively, each of R¹ and R² is a hydrocarbon group having 1 to 20 carbon atoms, or a hydrocarbon group having 1 to 20 carbon atoms and at least one of a halogen atom, a heteroatom and an unsaturated bond, and R¹ and R² are bonded to each other to form a cyclic structure.

Specific examples of the above-mentioned hydrocarbon group or hydrocarbon group having a halogen atom or the like include a chain alkyl group such as a methyl group, an ethyl group, a propyl group, a butyl group, an isopropyl group, a pentyl group, a hexyl group, a heptyl group and an octyl group; a cyclic alkyl group such as a cyclopentyl group and a cyclohexyl group; a halogen-containing chain alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group and a hexafluoro-2-propyl group; a halogen-containing cyclic alkyl group such as a 2-iodocyclohexyl group, a 2-bromocyclohexyl group, a 2-chlorocyclohexyl group and a 2-fluorocyclohexyl group; a chain alkenyl group such as a 2-propenyl group, an isopropenyl group, a 2-butenyl group and a 3-butenyl group; a cyclic alkenyl group such as a 2-cyclopentenyl group, a 2-cyclohexenyl group and 3-cyclohexenyl group; a chain alkynyl group such as a 2-propynyl group, a 1-butynyl group, a 2-butynyl group, a 3-butynyl group, a 1-pentynyl group, a 2-pentynyl group, a 3-pentynyl group and 4-pentynyl group; an aryl group such as a phenyl group, a 3-methoxyphenyl group, a 4-methoxyphenyl group, a 3,5-dimethoxyphenyl group and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group and a 3,5-difluorophenyl group; and a naphthyl group such as a 1-naphthyl group, a 2-naphthyl group and a 3-amino-2-naphthyl group.

The halogen atom means an atom of fluorine, chlorine, bromine or iodine, and a part or all of hydrogen in the hydrocarbon group may be replaced with any of these halogen atoms. The heteroatom means an atom of oxygen, nitrogen or sulfur. Further, the number of unsaturated bonds is preferably in the range of 1 to 10, more preferably in the range of 1 to 5, and particularly preferably in the range of 1 to 3.

Furthermore, the R¹ and R² are any of the hydrocarbon group and the hydrocarbon group having a halogen atom or the like, and may be coupled to each other to form a cyclic structure. In this case, specific examples of the above-mentioned hydrocarbon group or hydrocarbon group having a halogen atom or the like include a linear alkylene group such as a methylene group, an ethylene group, a propylene group, a butylene group, a pentylene group, a hexylene group, a heptylene group, an octylene group and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group and a tetrafluoroethylene group; and a cyclic hydrocarbon group, such as a cyclohexylene group, a phenylene group, a benzylene group, a naphthylene group, an anthracylene group, a naphthacylene group and a pentacylene group, and a part or all thereof substituted with halogen atoms.

R¹ and R² may be the same or different in the exemplified group of functional groups. The group of functional groups exemplified above is merely an example, and the present invention is not limited thereto.

Specific examples of the anion in the phosphoric acid ester salt represented by the chemical formula (9) include a dimethyl phosphate anion, a diethyl phosphate anion, a dipropyl phosphate anion, a bis(2,2,2-trifluoroethyl)phosphate anion, and a bis(1,1,1,3,3,3-hexafluoroisopropyl)phosphate anion.

Among the other electrolytes such as the boron complex salts exemplified above, those having the cation of BF₄⁻, PF₆⁻, N(CF₃SO₂)₂⁻ or N(SO₂F)₂- are preferable, and those having the cation of BF₄⁻, PF₆⁻ or N(SO₂F)₂⁻ are more preferable, from the viewpoint of easy availability. From the viewpoint of improving battery characteristics, those having the cation of PF₆⁻ or N(SO₂F)₂⁻ are preferable.

### <Additive>

The non-aqueous electrolytic solution according to the present embodiment may contain additives in addition to the non-aqueous solvent and the electrolyte.

The additive is not limited, and is, for example, at least one compound selected from the group consisting of a boric acid ester, an acid anhydride, a cyclic carbonates having an unsaturated bond, a cyclic carbonate having a halogen atom, a cyclic sulfonic acid ester, an amine having an acetoacetyl group, and a phosphorus compound.

### 1. Boric Acid Ester

The boric acid ester is not particularly limited in its type as long as it does not impair the characteristics of the non-aqueous electrolytic solution of the present embodiment and the secondary battery using the same, and various boric acid esters can be selected. Specific examples of the boric acid esters include trimethyl borate, triethyl borate, triisopropyl borate, tributyl borate, tripentyl borate, trihexyl borate, triheptyl borate, triphenyl borate, tris(2,2,2-iodoethyl) diborate, tris(2,2,2-tribromoethyl) borate, tris(2,2,2-trichloroethyl) borate, tris(2,2,2-trifluoroethyl) borate, tris(4-iodophenyl) borate, tris(4-bromophenyl) borate, tris(4-chlorophenyl) borate, tris(4-fluorophenyl) borate, diethyl methyl borate, ethyl dimethyl borate and the like.

### 2. Acid Anhydride

The type of the acid anhydride is not limited as long as it does not impair the characteristics of the non-aqueous electrolytic solution according to the present embodiment and a secondary battery using the non-aqueous electrolytic solution, and various types of acid anhydrides can be selected. Specific examples of the acid anhydrides include linear carboxylic acid anhydrides such as acetic anhydride, propionic anhydride, butylic anhydride, valeric anhydride, hexanoic anhydride, heptanoic anhydride, octanoic anhydride, nonanoic anhydride, decanoic anhydride, eicosanoic anhydride, docosanoic anhydride, benzoic anhydride, 4-methoxybenzoic anhydride, diphenylacetic anhydride, crotonic anhydride, cyclohexanecarboxylic anhydride, elaidic anhydride, isobutyric anhydride, isovaleric anhydride, lauric anhydride, linoleic anhydride, myristic anhydride, angelic anhydride, chlorodifluoroacetic anhydride, trichloroacetic anhydride, difluoroacetic anhydride, trifluoroacetic anhydride and 4-trifluoromethylbenzoic anhydride; cyclic carboxylic acid anhydrides such as phthalic anhydride, 3-acetamidophthalic anhydride, 4,4'-carbonyldiphthalic anhydride, 4,4'-biphthalic anhydride, 3-iodophthalic anhydride, 3-bromophthalic anhydride, 3-chlorophthalic anhydride, 3-fluorophthalic anhydride, 4-iodophthalic anhydride, 4-bromophthalic anhydride, 4-chlorophthalic anhydride, 4-fluorophthalic anhydride, 4,5-diiodophthalic anhydride, 4,5-dibromophthalic anhydride, 4,5-dichlorophthalic anhydride, 4,5-difluorophthalic anhydride, 4,4'-sulfonyldiphthalic anhydride, 3-nitrophthalic anhydride, 4-nitrophthalic anhydride, exo-3,6-epoxyhexahydrophthalic anhydride, exo-3,6-epoxy-1,2,3,6-tetrahydrophthalic anhydride, tetraiodophthalic anhydride, tetrachlorhopthalic anhydride, tetrafluorophthalic anhydride, 4-tert-butylphthalic anhydride, 4-ethynylphthalic anhydride, 4,4'-(hexafluoroisopropylidene)diphthalic anhydride, succinic anhydride, (R)-(+)-2-acetoxysuccinic anhydride, (S)-(-)-2-acetoxysuccinic anhydride, 2-buten-1-ylsuccinic anhydride, butylsuccinic anhydride, decylsuccinic anhydride, 2,3-dimethylsuccinic anhydride, 2-dodecene-1-ylsuccinic anhydride, dodecylsuccinic anhydride, octadecenyl succinic anhydride, (2,7-octadien-1-yl)succinic anhydride, n-octylsuccinic anhydride, hexadecylsuccinic anhydride, maleic anhydride, 2,3-bis(2,4,5-trimethyl-3-thienyl)maleic anhydride, 2-(2-carboxyethyl)-3-methylmaleic anhydride, 2,3-dimethylmaleic anhydride, 2,3-diphenylmaleic anhydride, phenylmaleic anhydride, 4-pentene-1,2-dicarboxylic anhydride, 2,3-anthracenedicarboxylic anhydride, bicyclo[2.2.2]oct-5-ene-2,3-dicarboxylic anhydride, 4-bromo-1,8-naphthalenedicarboxylic anhydride, (+/-)-trans-1,2-cyclohexanedicarboxylic anhydride, cis-4-cyclohexene-1,2-dicarboxylic anhydride, 2,5-dibromo-3,4-thiophenedicarboxylic anhydride, 5,6-dihydro-1,4-dithiin-2,3-dicarboxylic anhydride, 2,2'-biphenyldicarboxylic anhydride, 4-methylcyclohexane-1,2-dicarboxylic anhydride, 3-methyl-4-cyclohexene-1,2-dicarboxylic anhydride, 4-methyl-4-cyclohexene-1,2-dicarboxylic anhydride, 2,3-naphthalenedicarboxylic anhydride, 3,4-thiophenedicarboxylic anhydride, 1,8-naphthalenedicarboxylic anhydride, 5-norbornene-2,3-dicarboxylic anhydride, 1,2-cyclopropane dicarboxylic anhydride, glutaric anhydride, 3,3-pentamethyleneglutaric anhydride, 2,2-dimethylglutaric anhydride, 3,3-dimethylglutaric anhydride, 3-methylglutaric anhydride, 2-phthalimidoglutaric anhydride, 3,3-tetramethyleneglutaric anhydride, N-methylisatoic anhydride, 4-iodoisatoic anhydride, 4-bromoisatoic anhydride, 4-chloroisatoic anhydride, 4-fluoroisatoic anhydride, 5-iodoisatoic anhydride, 5-bromoisatoic anhydride, 5-chloroisatoic anhydride, 5-fluoroisatoic anhydride, itaconic anhydride, caronic anhydride, citraconic anhydride, diglycolic anhydride, 1,2-naphthalic anhydride, pyromellitic dianhydride, het anhydride and 2,2,3,3,4,4-hexafluoropentanedioic anhydride; linear sulfonic acid anhydrides such as trifluoromethanesulfonic anhydride and p-toluenesulfonic anhydride; cyclic sulfonic acid anhydrides such as 2-sulfobenzoic anhydride, tetraiodo-o-sulfobenzoic anhydride, tetrabromo-o-sulfobenzoic anhydride, tetrachloro-o-sulfobenzoic anhydride and tetrafluoro-o-sulfobenzoic anhydride; chain phosphinic acid anhydrides such as diphenyl phosphinic acid; cyclic phosphonic acid anhydrides such as 1-propanephosphonic anhydride; 3,4-diiodophenylboronic anhydride, 3,4-dibromophenylboronic anhydride, 3,4-dichlorophenylboronic anhydride, 3,4-difluorophenylboronic anhydride, 4-iodophenylboronic anhydride, 4-bromophenylboronic anhydride, 4-chlorophenylboronic anhydride, 4-fluorophenylboronic anhydride, (m-terphenyl)boronic anhydride, 3,4,5-triiodophenylboronic anhydride, 3,4,5-tribromophenylboronic anhydride, 3,4,5-trichlorophenylboronic anhydride, 3,4,5-trifluorophenylboronic anhydride and the like. Among these acid anhydrides, those having a cyclic structure, preferably with an unsaturated bond in the molecule, are preferable. The acid anhydride is particularly preferably maleic anhydride from the viewpoint of easy availability and the viewpoint of having a cyclic structure and an unsaturated bond in the molecule.

### 3. Cyclic Carbonate having an unsaturated bond

The cyclic carbonate having an unsaturated bond is not particularly limited in its type as long as it does not impair the characteristics of the non-aqueous electrolytic solution of the present embodiment and the secondary battery using the same, and various cyclic carbonates having an unsaturated bond can be selected. The number of the unsaturated bonds is preferably 1 to 10, more preferably 1 to 5, and particularly preferably 1 to 3. Specific examples of the cyclic carbonate having an unsaturated bond include vinylene carbonate, iodovinylene carbonate, bromovinylene carbonate, chlorovinylene carbonate, fluorovinylene carbonate, 1,2-diiodovinylene carbonate, 1,2-dibromovinylene carbonate, 1,2-dichlorovinylene carbonate, 1,2-difluorovinylene carbonate, methyl vinylene carbonate, iodomethyl vinylene carbonate, bromomethyl vinylene carbonate, chloromethyl vinylene carbonate, fluoromethyl vinylene carbonate, dichloromethyl vinylene carbonate, dibromomethyl vinylene carbonate, dichloromethyl vinylene carbonate, difluoromethyl vinylene carbonate, triiodomethyl vinylene carbonate, tribromomethyl vinylene carbonate, trichloromethyl vinylene carbonate, trifluoromethyl vinylene carbonate, ethyl vinylene carbonate, propyl vinylene carbonate, butyl vinylene carbonate, dimethyl vinylene carbonate, diethyl vinylene carbonate, dipropyl vinylene carbonate, vinyl ethylene carbonate and the like. The cyclic carbonate having an unsaturated bond is preferably vinylene carbonate from the viewpoint of easy availability.

### 4. Cyclic Carbonate having a halogen atom

The cyclic carbonate having a halogen atom is not particularly limited in its type as long as it does not impair the characteristics of the non-aqueous electrolytic solution of the present embodiment and the secondary battery using the same, and various cyclic carbonates having a halogen atom can be selected. Herein, the halogen atom means a fluorine atom, a chlorine atom, a bromine atom or an iodine atom. Specific examples of the cyclic carbonate having a halogen atom include iodoethylene carbonate, bromoethylene carbonate, chloroethylene carbonate, fluoroethylene carbonate, 1,2-diiodoethylene carbonate, 1,2-dibromoethylene carbonate, 1,2-dichloroethylene carbonate, 1,2-difluoroethylene carbonate and the like. The cyclic carbonate having a halogen atom is preferably chloroethylene carbonate and fluoroethylene carbonate from the viewpoint of easy availability.

### 5. Cyclic Sulfonic Acid Ester

The cyclic sulfonic acid ester is not particularly limited in its type as long as it does not impair the characteristics of the non-aqueous electrolytic solution of the present embodiment and the secondary battery using the same, and various cyclic sulfonic acid esters can be selected. Specific examples of the cyclic sulfonic acid ester include 1,3-propane sultone, 2,4-butane sultone, 1,4-butane sultone, ethylenesulfite and the like. The cyclic sulfonic acid ester is preferably 1,3-propane sultone and ethylene sulfite from the viewpoint of easy availability.

### 6. Amine having acetoacetyl group

The type of the amine having an acetoacetyl group is not limited as long as it does not impair the characteristics of the non-aqueous electrolytic solution according to the present embodiment and a secondary battery using the non-aqueous electrolytic solution, and various types of amines can be selected. Specific examples of the amine having an acetoacetyl group include N,N-dimethylacetoacetamide, N,N-diethylacetoacetamide, N,N-dipropylacetoacetamide, N,N-dibutylacetoacetamide, N,N-ethylmethylacetoacetamide, N,N-methylpurpiracetoacetamide, and N,N-butylmethylacetoacetamide. However, these specific compounds are merely an example, and the present embodiment is not limited thereto.

### 7. Phosphorus compound

The phosphorus compound is not limited as long as it does not impair the characteristics of the non-aqueous electrolytic solution according to the present embodiment and the secondary battery using the non-aqueous electrolytic solution, and examples thereof include phosphines and phosphonic acids. Specific examples of the phosphine include trimellylphosphine, triethylphosphine, triisopropylphosphine, and triphenylphosphine. Specific examples of the phosphonic acid include dimethyl phosphite, diethyl phosphite, dibutyl phosphite, diphenyl phosphite, and bis (2,2,2-trifluoroethyl)phosphite.

The content of the additive is preferably in the range of 0.05 mass% to 50 mass%, more preferably in the range of 0.1 mass% to 30 mass%, and particularly preferably in the range of 0.5 mass% to 20 mass% with respect to the total mass of the non-aqueous electrolytic solution. When the content is 0.05 mass% or more, it is possible to achieve an effect as an additive, that is, formation of a further stable film on the electrode surface. On the other hand, when the addition amount is 20 mass% or less, it is possible to suppress an excessive decrease in solubility of the electrolyte in the non-aqueous electrolytic solution in the non-aqueous solvent.

### <Production of non-aqueous electrolytic solution>

The non-aqueous electrolytic solution according to the present embodiment can be produced by, for example, adding a predetermined amount of a difluorophosphoric acid salt and/or a nitric acid salt to a non-aqueous solvent containing at least one of phosphoric acid esters of chemical formulae (1) to (3). Here, it is not preferable that the difluorophosphoric acid salt and the nitric acid salt are supersaturated, resulting in precipitation of insoluble components. It is preferable to use the non-aqueous solvent, the difluorophosphoric acid salt and the nitric acid salt, whose impurity contents are minimized by performing purification or the like in advance within the bounds of not reducing production efficiency. When both the difluorophosphoric acid salt and the nitric acid salt are used as the electrolyte, the order in which they are added to the non-aqueous solvent is not limited, and is arbitrary. When an additive is further incorporated into the non-aqueous electrolytic solution, the order of the additive is not limited, and is arbitrary.

### < Others >

The non-aqueous electrolytic solution according to the present embodiment may contain another heretofore known additive. Here, the content of the other additive can be appropriately set as necessary.

### (Non-aqueous secondary battery)

Next, a non-aqueous secondary battery (hereinafter, referred to as a "secondary battery") according to the present embodiment will be described below with reference to Fig. 1. Fig. 1 is a schematic sectional view showing an outline of the secondary battery according to the present embodiment.

The secondary battery of the present embodiment can be applied to a lithium ion secondary battery, a sodium ion secondary battery, a potassium ion secondary battery, a magnesium ion secondary battery, a calcium ion secondary battery, and the like.

As shown in Fig. 1, the secondary battery has a structure in which a laminate obtained by laminating a positive electrode 1, a separator 3, a negative electrode 2 and a spacer 7 in the stated order from the positive electrode can 4 side is housed in an internal space formed by a positive electrode can 4 and a negative electrode can 5. The positive electrode 1 and the negative electrode 2 are moderately pressure-bonded and fixed by interposing a spring 8 between the negative electrode can 5 and the spacer 7. The non-aqueous electrolytic solution fills the gaps between the positive electrode 1, the separator 3, and the negative electrode 2. The positive electrode can 4 and the negative electrode can 5 are sandwiched with a gasket 6 interposed between the positive electrode can 4 and the negative electrode can 5, thereby bonding the electrode cans to each other to seal the laminate.

A material of a positive electrode active material layer in the positive electrode 1 is not particularly limited, and examples thereof include transition metal compounds having a structure in which lithium ions can be diffused and oxides of the transition metal compound and lithium. Examples of the specific materials to be used include oxides such as LiCoO₂, LiNiO₂, LiMn₂O₄, a solid solution Li₂MnO₃ and LiMeO₂ (Me is Mn, Co or Ni), LiFePO₄, LiCoPO₄, LiMnPO₄, Li₂FePO₄F, LiNiₓCo_{y}Mn_{z}O₂ (0 ≤ x ≤ 1, 0 ≤ y ≤ 1, 0 ≤ z ≤ 1, x + y + z = 1), LiNiₓCo_{y}Al_{z}O₂(0 ≤ x ≤ 1, 0 ≤ y ≤ 1 , 0 ≤ z ≤ 1, x + y + z = 1), LiFeF₃, TiO₂, V₂O₅ and MoO₃; sulfides such as TiS₂ and FeS; sulfur; conductive polymers such as polyacetylene, polyparaphenylene, polyaniline and polypyrrole; an activated carbon; polymers generating radicals; carbon materials; and the like.

The positive electrode 1 can be obtained by molding the positive electrode active material described above by pressure molding together with a conduction aid and a binder which are publicly known, or by mixing a positive electrode active material in an organic solvent such as pyrrolidone together with a conduction aid and a binder which are publicly known to form a paste, applying the paste onto a current collector of an aluminum foil or the like, and drying the paste.

The material of a negative active material layer in the negative electrode 2 is not limited as long as it is capable of occluding (precipitating) and releasing (dissolving) metal ions, and examples thereof include metal composite oxides, lithium metals, lithium alloys, sodium metals, sodium alloys, potassium metals, potassium alloys, magnesium, magnesium alloys, calcium metals, calcium alloys, aluminum, aluminum alloys, silicon, silicon-based alloys, tin-based alloys, metal oxides, conductive polymers such as polyacetylene, Li-Co-Ni-based materials, and carbon materials.

In addition, when an alkali metal or an alkaline earth metal is used for the negative electrode, a metal ion matching the type of secondary battery can be dissolved as an electrolyte in an electrolytic solution, and a metal precipitated on a current collector in a charge process can be used as a negative active material. In this case, it is only required to provide only the current collector on the negative electrode side, and there is an advantage that the battery configuration can be simplified.

The metal composite oxides are not particularly limited, and examples thereof include LiₓFe₂O₃ (0 ≤ x ≤ 1), LiₓWO₂ (0 ≤ x ≤ 1), SnₓMe¹_{1-xM}e²_{y}O_{z} (Me¹ is Mn, Fe, Pb or Ge, Me² is Al, B, P, Si, elements in Groups 1 to 3 of a periodic table or halogens, and 0 < x ≤ 1, 1 ≤ y ≤ 3 and 1 ≤ z ≤ 8) and the like.

The metal oxides are not particularly limited, and examples thereof include SnO, SnO₂, SiOₓ (0 < x < 2), PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅ and the like.

The carbon materials are not particularly limited, and examples thereof include natural graphite, artificial graphite, borated graphite, fluorinated graphite, meso-carbon microbead, graphitize pitch-based carbon fiber, carbon nanotube, hard carbon, fullerene, graphene and the like.

For the negative electrode 2, a foil-like electrode material or a powdery electrode material of the aforementioned electrode material can be used. In the case of the powdery electrode material, the negative electrode 2 can be obtained by molding the electrode material by pressure molding together with a conduction aid and a binder which are publicly known, or by mixing the electrode material in an organic solvent such as pyrrolidone together with a conduction aid and a binder which are publicly known to form a paste, applying the paste onto a current collector of a copper foil or the like, and drying the paste.

In the lithium ion secondary battery of the present embodiment, a separator 3 is interposed between the positive electrode 1 and the negative electrode 2 in order to prevent short circuit therebetween. A material or a shape of the separator 3 is not particularly limited; however, the material is preferably a material through which the aforementioned non-aqueous electrolytic solution can easily pass and which is insulating and chemically stable. Examples thereof include microporous films, sheets, nonwoven fabrics, products obtained by coating surfaces thereof with glass, and nonwoven fabrics of glass fibers. As the specific examples of the polymer material, nylon (registered trademark), nitrocellulose, polyacrylonitrile, polyvinylidene fluoride, polyethylene, polypropylene and polyolefinic polymers, such as polyethylene and polypropylene, are used. The polyolefinic polymers are preferred from the viewpoint of electrochemical stability and chemical stability.

An optimum service voltage of the lithium ion secondary battery of the present embodiment varies among combinations of the positive electrode 1 and the negative electrode 2, and the voltage can be usually used in a range of 2.4 V to 4.6 V.

A shape of the lithium ion secondary battery of the present embodiment is not particularly limited, and examples thereof include a cylindrical shape, a prismatic shape, a laminate shape and the like in addition to a coin shape shown in Fig. 1.

The secondary battery according to the present embodiment has sufficient flame retardancy, and can exhibit excellent cycle characteristics and resistance characteristics, and the non-aqueous electrolytic solution according to the present embodiment can be suitably used for, for example, lithium ion secondary batteries. However, the lithium ion secondary battery shown in Fig. 1 is illustrative of an aspect of the secondary battery of the present invention, and the secondary battery of the present invention is not limited thereto.

### EXAMPLES

Suitable examples of the present invention will be described in detail below by way of examples. However, materials or mixing amounts described in these examples do not purport to limit the scope of the present invention only to these unless there is a definitive description.

### (Example 1)

### <Production of non-aqueous electrolytic solution>

In an argon atmosphere dry box having a dew point of -70°C or lower, ethylene carbonate (EC, manufactured by Kishida Chemical Co., Ltd., lithium battery grade) and triethyl phosphate (TEP, manufactured by Tokyo Chemical Industry Co., Ltd.) were mixed to prepare a non-aqueous solvent. The mixing ratio of EC to TEP in the non-aqueous solvent was 5 : 5 on a volume basis.

Next, LiPO₂F₂ and LiPF₆ as an electrolyte were mixed with the non-aqueous solvent. Here, the concentration of LiPO₂F₂ was set to 0.5 mol/liter, and the concentration of LiPF₆ was set to 0.5 mol/liter. In this way, a non-aqueous electrolytic solution of the present example was prepared.

### (Example 2)

In the present example, the mixing ratio of EC to TEP in the non-aqueous solvent was changed to 7 : 3 on a volume basis. Except for the above, the same procedure as in Example 1 was carried out to prepare a non-aqueous electrolytic solution of the present example.

### (Example 3)

In the present example, only LiPO₂F₂ was used as an electrolyte, and the concentration thereof was changed to 1.0 mol/liter. Except for the above, the same procedure as in Example 1 was carried out to prepare a non-aqueous electrolytic solution of the present example.

### (Example 4)

In the present example, the mixing ratio of EC to TEP in the non-aqueous solvent was changed to 2 : 8 on a volume basis. Only LiPO₂F₂ was used as an electrolyte, and the concentration thereof was changed to 1.0 mol/liter. Except for the above, the same procedure as in Example 1 was carried out to prepare a non-aqueous electrolytic solution of the present example.

### (Example 5)

In the present example, the mixing ratio of EC to TEP in the non-aqueous solvent was changed to 2 : 8 on a volume basis. Except for the above, the same procedure as in Example 1 was carried out to prepare a non-aqueous electrolytic solution of the present example.

### (Example 6)

In the present example, the mixing ratio of EC to TEP in the non-aqueous solvent was changed to 2 : 8 on a volume basis. The concentration of LiPO₂F₂ was changed to 0.8 mol/liter, and the concentration of LiPF₆ was changed to 0.2 mol/liter. Except for the above, the same procedure as in Example 1 was carried out to prepare a non-aqueous electrolytic solution of the present example.

### (Example 7)

In the present example, the mixing ratio of EC to TEP in the non-aqueous solvent was changed to 2 : 8 on a volume basis. The concentration of LiPO₂F₂ was changed to 0.2 mol/liter, and the concentration of LiPF₆ was changed to 0.8 mol/liter. Except for the above, the same procedure as in Example 1 was carried out to prepare a non-aqueous electrolytic solution of the present example.

### (Example 8)

In the present example, the mixing ratio of EC to TEP in the non-aqueous solvent was changed to 2 : 8 on a volume basis. The concentration of LiPO₂F₂ was changed to 0.1 mol/liter, and the concentration of LiPF₆ was changed to 0.9 mol/liter. Except for the above, the same procedure as in Example 1 was carried out to prepare a non-aqueous electrolytic solution of the present example.

### (Example 9)

In the present example, the mixing ratio of EC to TEP in the non-aqueous solvent was changed to 2 : 8 on a volume basis. The electrolyte was changed from LiPF₆ to LiTFSI(Li(CF₃SO₂)₂N). Except for the above, the same procedure as in Example 1 was carried out to prepare a non-aqueous electrolytic solution of the present example.

### (Example 10)

In the present example, a mixed solvent composed of ethylene carbonate and diethyl monofluorophosphate was used as a non-aqueous solvent, and the volume ratio of ethylene carbonate and diethyl monofluorophosphate was changed to 2 : 8. Further, only LiPO₂F₂ was used as an electrolyte, and the concentration thereof was changed to 1.0 mol/liter. Except for the above, the same procedure as in Example 1 was carried out to prepare a non-aqueous electrolytic solution of the present example.

### (Example 11)

In the present example, the mixing ratio of EC to TEP in the non-aqueous solvent was changed to 2 : 8 on a volume basis. Further, only LiNO₃ was used as an electrolyte, and the concentration thereof was changed to 1.0 mol/liter. Except for the above, the same procedure as in Example 1 was carried out to prepare a non-aqueous electrolytic solution of the present example.

### (Example 12)

In the present example, a mixed solvent composed of ethylene carbonate and diethyl(2-(2-(2-methoxyethoxy)ethoxy)ethyl) phosphate was used as a non-aqueous solvent, and the volume ratio of ethylene carbonate and diethyl(2-(2-(2-methoxyethoxy)ethoxy)ethyl) phosphate was changed to 2 : 8. Further, only LiNO₃ was used as an electrolyte, and the concentration thereof was changed to 1.0 mol/liter. Except for the above, the same procedure as in Example 1 was carried out to prepare a non-aqueous electrolytic solution of the present example.

### (Example 13)

In the present example, the mixing ratio of EC to TEP in the non-aqueous solvent was changed to 2 : 8 on a volume basis. As an electrolyte, LiNO₃ and LiTFSI were used. The concentration of each of the compounds was 0.5 mol/liter. Except for the above, the same procedure as in Example 1 was carried out to prepare a non-aqueous electrolytic solution of the present example.

### (Example 14)

In the present example, the mixing ratio of EC to TEP in the non-aqueous solvent was changed to 2 : 8 on a volume basis. As an electrolyte, LiPO₂F₂ was changed to LiNO₃. Except for the above, the same procedure as in Example 1 was carried out to prepare a non-aqueous electrolytic solution of the present example.

### (Example 15)

In the present example, the mixing ratio of EC to TEP in the non-aqueous solvent was changed to 2 : 8 on a volume basis. As an electrolyte, LiPF₆ was changed to LiNO₃. Except for the above, the same procedure as in Example 1 was carried out to prepare a non-aqueous electrolytic solution of the present example.

### (Example 16)

In the present example, the mixing ratio of EC to TEP in the non-aqueous solvent was changed to 2 : 8 on a volume basis. As an electrolyte, LiNO₃, LiPO₂F₂ and LiPF₆ were mixed at concentrations of 0.33 mol/liter, 0.33 mol/liter and 0.33 mol/liter, respectively, with a non-aqueous solvent. Except for the above, the same procedure as in Example 1 was carried out to prepare a non-aqueous electrolytic solution of the present example.

### (Example 17)

In the present example, a mixed solvent composed of ethylene carbonate, triethyl phosphate and diethyl monofluorophosphate was used as a non-aqueous solvent, and the volume ratio of ethylene carbonate, triethyl phosphate and diethyl monofluorophosphate was changed to 2 : 4 : 4. Further, only LiPO₂ F₂ was used as an electrolyte, and the concentration thereof was changed to 1.0 mol/liter. Except for the above, the same procedure as in Example 1 was carried out to prepare a non-aqueous electrolytic solution of the present example.

### (Example 18)

In the present example, the non-aqueous solvent was changed to a solvent composed only of trimethyl phosphate (TMP). As an electrolyte, LiNO₃, LiPO₂F₂ and LiPF₆ were used, and mixed with a non-aqueous solvent at concentrations of 0.33 mol/liter for LiNO₃, 0.33 mol/liter for LiPO₂F₂ and 0.33 mol/liter for LiPF₆. Except for the above, the same procedure as in Example 1 was carried out to prepare a non-aqueous electrolytic solution of the present example.

### (Example 19)

In the present example, a mixed solvent composed of propylene carbonate and triethyl phosphate was used as a non-aqueous solvent, and the volume ratio of propylene carbonate and triethyl phosphate was changed to 2 : 8. Further, LiNO₃, LiPO₂F₂ and LiPF₆ was used as an electrolyte, and mixed with a non-aqueous solvent at concentrations of 0.33 mol/liter for LiNO₃, 0.33 mol/liter for LiPO₂F₂ and 0.33 mol/liter for LiPF₆. Except for the above, the same procedure as in Example 1 was carried out to prepare a non-aqueous electrolytic solution of the present example.

### (Example 20)

In the present example, a mixed solvent composed of γ-butyrolactone and triethyl phosphate was used as a non-aqueous solvent, and the volume ratio of y-butyrolactone and triethyl phosphate was changed to 5 : 5. Further, LiNO₃, LiPO₂F₂ and LiPF₆ was used as an electrolyte, and mixed with a non-aqueous solvent at concentrations of 0.33 mol/liter for LiNO₃, 0.33 mol/liter for LiPO₂F₂ and 0.33 mol/liter for LiPF₆. Except for the above, the same procedure as in Example 1 was carried out to prepare a non-aqueous electrolytic solution of the present example.

### (Example 21)

In the present example, a mixed solvent composed of dimethyl sulfoxide (DMSO) and triethyl phosphate was used as a non-aqueous solvent, and the volume ratio of dimethyl sulfoxide and triethyl phosphate was changed to 2 : 8. Further, LiNO₃, LiPO₂F₂ and LiPF₆ was used as an electrolyte, and mixed with a non-aqueous solvent at concentrations of 0.1 mol/liter for LiNO₃, 0.1 mol/liter for LiPO₂F₂ and 0.8 mol/liter for LiPF₆. Except for the above, the same procedure as in Example 1 was carried out to prepare a non-aqueous electrolytic solution of the present example.

### (Comparative Example 1)

In an argon atmosphere dry box having a dew point of -70°C or lower, ethylene carbonate (EC, manufactured by Kishida Chemical Co., Ltd., lithium battery grade) and dimethyl carbonate (DMC, manufactured by Kishida Chemical Co., Ltd.) were mixed to prepare a non-aqueous solvent. The mixing ratio of EC to DMC in the non-aqueous solvent was 1 : 1 on a volume basis.

Next, LiPF₆ as an electrolyte was mixed with the non-aqueous solvent. Here, the concentration of LiPF₆ was set to 1.0 mol/liter. In this way, a non-aqueous electrolytic solution of the present comparative example was prepared.

### (Comparative Example 2)

In the present comparative example, the non-aqueous solvent was changed to a solvent of EC alone. Except for the above, the same procedure as in Comparative Example 1 was carried out to prepare a non-aqueous electrolytic solution of the present example.

### (Comparative Example 3)

In the present comparative example, a mixed solvent of EC and TEP was used in place of the mixed solvent of EC and DMC as a non-aqueous solvent. The mixing ratio of EC to TEP was 9 : 1 on a volume basis. Except for the above, the same procedure as in Comparative Example 1 was carried out to prepare a non-aqueous electrolytic solution of the present example.

### (Comparative Example 4)

In the present comparative example, a mixed solvent of EC and TEP was used in place of the mixed solvent of EC and DMC as a non-aqueous solvent. The mixing ratio of EC to TEP was 8 : 2 on a volume basis. Except for the above, the same procedure as in Comparative Example 1 was carried out to prepare a non-aqueous electrolytic solution of the present example.

### (Comparative Example 5)

In the present comparative example, a mixed solvent of EC and TEP was used in place of the mixed solvent of EC and DMC as a non-aqueous solvent. The mixing ratio of EC to TEP was 7 : 3 on a volume basis. Except for the above, the same procedure as in Comparative Example 1 was carried out to prepare a non-aqueous electrolytic solution of the present example.

### (Comparative Example 6)

In the present comparative example, a mixed solvent of EC and TEP was used in place of the mixed solvent of EC and DMC as a non-aqueous solvent. The mixing ratio of EC to TEP was 5 : 5 on a volume basis. Except for the above, the same procedure as in Comparative Example 1 was carried out to prepare a non-aqueous electrolytic solution of the present example.

### (Comparative Example 7)

In the present comparative example, the mixing ratio of EC to TEP in the non-aqueous solvent was changed to 9 : 1 on a volume basis. Except for the above, the same procedure as in Example 1 was carried out to prepare a non-aqueous electrolytic solution of the present example.

### (Comparative Example 8)

In the present comparative example, the mixing ratio of EC to TEP in the non-aqueous solvent was changed to 8 : 2 on a volume basis. Except for the above, the same procedure as in Example 1 was carried out to prepare a non-aqueous electrolytic solution of the present example.

### (Comparative Example 9)

In the present comparative example, a mixed solvent of EC and TEP was used in place of the mixed solvent of EC and DMC as a non-aqueous solvent. The mixing ratio of EC to TEP was 2 : 8 on a volume basis. Except for the above, the same procedure as in Comparative Example 1 was carried out to prepare a non-aqueous electrolytic solution of the present example.

### (Comparative Example 10)

In the present comparative example, a mixed solvent of EC and TEP was used in place of the mixed solvent of EC and DMC as a non-aqueous solvent. The mixing ratio of EC to TEP was 2 : 8 on a volume basis. As an electrolyte, LiPF₆ was changed to LiTFSI. Except for the above, the same procedure as in Comparative Example 1 was carried out to prepare a non-aqueous electrolytic solution of the present example.

### (Comparative Example 11)

In the present comparative example, a mixed solvent of DMSO and TEP was used in place of the mixed solvent of EC and DMC as a non-aqueous solvent. The mixing ratio of DMSO to TEP was 2 : 8 on a volume basis.

**[Table 1]**

| | Non-aqueous solvent | | | Electrolyte | | | |
|---|---|---|---|---|---|---|---|
| | Phosphoric acid ester (A) | Other non-aqueous solvent (B) | Ratio of mass of phosphoric acid ester in non-aqueous electrolytic solution to total mass of non-aqueous electrolytic solution [%] | Difluorophosphoric acid salt/nitric acid salt | Concentration of difluorophosphoric acid salt/nitric acid salt (mol/l) | Other electrolyte | Concentration of other electrolyte (mol/l) |
| Example 1 | Triethyl phosphate | EC | 40 | LiPO₂F₂ | *0.5* | LiPF₆ | 0.5 |
| Example 2 | Triethyl phosphate | EC | 23 | LiPO₂F₂ | 0.5 | LiPF₆ | 0.5 |
| Example 3 | Triethyl phosphate | EC | 41 | LiPO₂F₂ | 1.0 | - | - |
| Example 4 | Triethyl phosphate | EC | 69 | LiPO₂F₂ | 1.0 | - | - |
| Example 5 | Triethyl phosphate | EC | 68 | LiPO₂F₂ | 0.5 | LiPF₆ | 0.5 |
| Example 6 | Triethyl phosphate | EC | 69 | LiPO₂F₂ | 0.8 | LiPF₆ | 0.2 |
| Example 7 | Triethyl phosphate | EC | 67 | LiPO₂F₂ | 0.2 | LiPF₆ | 0.8 |
| Example 8 | Triethyl phosphate | EC | 67 | LiPO₂F₂ | 0.1 | LiPF₆ | 0.9 |
| Example 9 | Triethyl phosphate | EC | 64 | LiPO₂F₂ | 0.5 | LiTFSI | 0.5 |
| Example 10 | Diethyl monofluorophosphate | EC | 69 | LiPO₂F₂ | 1.0 | - | - |

**[Table 2]**

| | Non-aqueous solvent | | | Electrolyte | | | |
|---|---|---|---|---|---|---|---|
| | Phosphoric acid ester (A) | Other non-aqueous solvent (B) | Ratio of mass of phosphoric acid ester in non-aqueous electrolytic solution to total mass of non-aqueous electrolytic solution [%] | Difluorophosphoric acid salt/nitric acid salt | Concentration of difluorophosphoric acid salt/nitric acid salt (mol/1) | Other electrolyte | Concentration of other electrolyte (mol/l) |
| Example 11 | Triethyl phosphate | EC | 72 | LiNO₃ | 1.0 | - | - |
| Example 12 | Diethyl phosphate (2-(2-(2-methoxyethoxy)ethoxy)ethyl) | EC | 72 | LiNO₃ | 1.0 | - | - |
| Example 13 | Triethyl phosphate | EC | 65 | LiNO₃ | 0.5 | LiTFSI | 0.5 |
| Example 14 | Triethyl phosphate | EC | 69 | LiNO₃ | 0.5 | LiPF₆ | 0.5 |
| Example 15 | Triethyl phosphate | EC | 71 | LiPO₂F₂ /LiNO₃ | 0.5 | - | - |
| | | | | | 0.5 | | |
| Example 16 | Triethyl phosphate | EC | 69 | LiPO₂F₂ /LiNO₃ | 0.33 | LiPF₆ | 0.33 |
| | | | | | 0.33 | | |
| Example 17 | Triethyl phosphate/diethyl monofluorophosphate | EC | 70 | LiPO₂F₂ | 1.0 | - | - |
| Example 18 | Trimethyl phosphate | - | 90 | LiPO₂F₂ /LiNO₃ | 0.33 | LiPF₆ | 0.33 |
| | | | | | 0.33 | | |
| Example 19 | Triethyl phosphate | PC | 71 | LiPO₂F₂ /LiNO₃ | 0.33 | LiPF₆ | 0.33 |
| | | | | | 0.33 | | |
| Example 20 | Triethyl phosphate | GBL | 44 | LiPO₂F₂ /LiNO₃ | 0.33 | LiPF₆ | 0.33 |
| | | | | | 0.33 | | |
| Example 21 | Triethyl phosphate | DMSO | 70 | LiPO₂F₂ /]LiNO₃ | 0.1 | LiPF₆ | 0.8 |
| | | | | | 0.1 | | |

**[Table 3]**

| | Non-aqueous solvent | | | Electrolyte | | | |
|---|---|---|---|---|---|---|---|
| | Phosphoric acid ester (A) | Other non-aqueous solvent (B) | Ratio of mass of phosphoric acid ester in non-aqueous electrolytic solution to total mass of non-aqueous electrolytic solution [%] | Difluorophosphoric acid salt/nitric acid salt | Concentration of difluorophosphoric acid salt/nitric acid salt (mol/l) | Other electrolyte | Concentration of other electrolyte (mol/l) |
| Comparative Example 1 | - | EC, DMC | - | - | - | LiPF₆ | 1.0 |
| Comparative Example 2 | - | EC | - | - | - | LiPF₆ | 1.0 |
| Comparative Example 3 | Triethyl phosphate | EC | 7 | - | - | LiPF₆ | 1.0 |
| Comparative Example 4 | Triethyl phosphate | EC | 15 | - | - | LiPF₆ | 1.0 |
| Comparative Example 5 | Triethyl phosphate | EC | 23 | - | - | LiPF₆ | 1.0 |
| Comparative Example 6 | Triethyl phosphate | EC | 39 | - | - | LiPF₆ | 1.0 |
| Comparative Example 7 | Triethyl phosphate | EC | 7 | LiPO₂F₂ | 0.5 | LiPF₆ | 0.5 |
| Comparative Example 8 | Triethyl phosphate | EC | 15 | LiPO₂F₂ | 0.5 | LiPF₆ | 0.5 |
| Comparative Example 9 | Triethyl phosphate | EC | 67 | - | - | LiPF₆ | 1.0 |
| Comparative Example 10 | Triethyl phosphate | EC | 59 | - | - | LiTFSI | 1.0 |
| Comparative Example 11 | Triethyl phosphate | DMSO | 69 | - | - | LiPF₆ | 1.0 |

### (Burning test on non-aqueous electrolytic solution)

First, a glass fiber filter (trade name: GC-50, manufactured by Advantec Toyo Kaisha, Ltd.) was impregnated with each of the non-aqueous electrolytic solutions of Examples 1, 2 and 17 and Comparative Examples 1 to 8 to prepare a sample. Next, a burning test was conducted by applying a flame of a gas burner to each sample for 1 second and observing the sample. The burning test was conducted twice. Further, whether the non-aqueous electrolytic solution was flame-retardant or flammable was determined from the results of the two burning tests. The evaluation criteria were as follows. Samples in which a fire was extinguished at the instant of separation from the flame of the gas burner were rated o, and samples which continued to burn even after separation from the flame were rated ×. Samples in which a fire was extinguished in both the two tests were evaluated as being flame-retardant, and other samples were evaluated as being flammable. The results are shown in Table 4.

**[Table 4]**

| | Burning test | | | Ratio of mass of phosphoric acid ester in non-aqueous electrolytic solution to total mass of non-aqueous electrolytic solution [%] |
|---|---|---|---|---|
| | First | Second | Evaluation | |
| Example 1 | ○ | ○ | Flame-retardant | 40 |
| Example 2 | ○ | ○ | Flame-retardant | 23 |
| Example 17 | ○ | ○ | Flame-retardant | 70 |
| Comparative Example 1 | × | Not done | Flammable | 0 |
| Comparative Example 2 | × | Not done | Flammable | 0 |
| Comparative Example 3 | ○ | × | Flammable | 7 |
| Comparative Example 4 | ○ | × | Flammable | 15 |
| Comparative Example 5 | ○ | ○ | Flame-retardant | 23 |
| Comparative Example 6 | ○ | ○ | Flame-retardant | 39 |
| Comparative Example 7 | ○ | × | Flammable | 7 |
| Comparative Example 8 | ○ | × | Flammable | 15 |

As can be seen from Table 4, the non-aqueous electrolytic solution was flammable in Comparative Example 1 where a mixed solvent composed of ethylene carbonate and dimethyl carbonate was used and Comparative Example 2 where a solvent composed only of ethylene carbonate was used. From these, it is presumed that when a mixed solvent composed of a cyclic carbonate and a chain carbonate or a solvent composed only of a cyclic carbonate is used for a non-aqueous solvent, the non-aqueous electrolytic solution is flammable. Even in Comparative Examples 3, 4, 7 and 8 where a mixed solvent composed of ethylene carbonate and triethyl phosphate was used, the non-aqueous electrolytic solution was flammable.

On the other hand, even in the case where a mixed solvent composed of ethylene carbonate and triethyl phosphate was used, it was possible to impart flame retardancy to the non-aqueous electrolytic solution by setting the content of triethyl phosphate to 20 mass% or more with respect to the total mass of the non-aqueous electrolytic solution.

### (Evaluation of cycle characteristics)

### <Production of coin cell>

A coin-type lithium ion secondary battery (coin cell) like one shown in Fig. 1 was produced using the non-aqueous electrolytic solution produced in each of Examples 1 to 20 and Comparative Examples 5, 6, 9 and 10, followed by evaluation of electrochemical characteristics.

That is, LiNi_{1/3}Co_{1/3}Mn_{1/3}O₂ (manufactured by PIOTREK) cut to a diameter of 11.3 mmϕ was used as a positive electrode, and a glass fiber filter (GC-50, manufactured by Advantec Toyo Kaisha, Ltd.) was used as a separator. As a negative electrode, a lithium foil (manufactured by Honjo Metal Co., Ltd.) cut to a diameter of 13 mmϕ was used. Further, a positive electrode, a separator and a negative electrode were laminated in the stated order to obtain a laminate, and the laminate was impregnated with the non-aqueous electrolytic solution prepared in each of Examples 1 to 20 and Comparative Examples 5, 6, 9 and 10, and then sealed to produce a coin cell. The coin cells were all assembled in an argon globe box having a dew point of -70°C or lower.

### <Cycle characteristics and resistance characteristics of coin cell>

Each of the produced coin cells was charged to a final voltage of 4.3 V at a charge current of 0.5 mA/cm² in a thermostatic bath at 25°C, and held at a constant potential of 4.3 V until the charge current was 0.15 mA/cm² or less. The coin cell was then discharged to a final voltage of 3.0 V at a discharge current of 0.5 mA/cm². The battery was charged and discharged 100 cycles by a current-constant-voltage method under the present conditions. Comparative evaluation of the discharge capacity and the direct-current resistance after 100 cycles was performed. A voltage loss obtained by subtracting a charge termination voltage and a voltage 3 seconds after the start of discharge was divided by a discharge current to determine the direct-current resistance. Table 5 shows ratios of the discharge capacity and the DC resistance in examples and comparative examples to those in Comparative Example 9, which are defined as 100.

**[Table 5]**

| | Discharge capacity | Direct current resistance |
|---|---|---|
| Example 1 | 113 | 22 |
| Example 2 | 112 | 20 |
| Example 3 | 111 | 46 |
| Example 4 | 110 | 85 |
| Example 5 | 111 | 33 |
| Example 6 | 111 | 46 |
| Example 7 | 113 | 26 |
| Example 8 | 112 | 30 |
| Example 9 | 113 | 31 |
| Example 10 | 113 | 41 |
| Example 11 | 113 | 70 |
| Example 12 | 110 | 60 |
| Example 13 | 113 | 31 |
| Example 14 | 113 | 33 |
| Example 15 | 114 | 30 |
| Example 16 | 114 | 25 |
| Example 17 | 112 | 61 |
| Example 18 | 113 | 34 |
| Example 19 | 113 | 30 |
| Example 20 | 113 | 35 |
| Comparative Example 5 | 106 | 63 |
| Comparative Example 6 | 102 | 75 |
| Comparative Example 9 | 100 | 100 |
| Comparative Example 10 | 94 | 107 |

As is apparent from Table 5, it was confirmed that the coin cells using, respectively, the non-aqueous electrolytic solutions of examples, which contain a phosphoric acid ester that imparts flame retardancy, had a higher discharge capacity after 100 cycles and a lower direct-current resistance as compared to comparative examples. Thus, it was confirmed that the non-aqueous electrolytic solutions of examples and the lithium ion secondary batteries using the non-aqueous electrolytic solution were excellent in usefulness.

### (Evaluation of coulombic efficiency characteristics)

### <Production of coin cell>

In the non-aqueous electrolytic solutions of Example 21 and Comparative Example 11, oxidation resistance is insufficient, and an electrode that is charged to a high voltage, such as LiNi_{1/3}Co_{1/3}Mn_{1/3}O₂, may be difficult to use as a positive electrode. Therefore, for each of these non-aqueous electrolytic solutions, a coin-type lithium ion secondary battery (coin cell) shown in Fig. 1, which will be described below, was produced, followed by evaluation of electrochemical characteristics.

That is, a copper foil (manufactured by The Nilaco Corporation) cut to a diameter of 11.3 mmϕ was used as a positive electrode, and a glass fiber filter (GC-50, manufactured by Advantec Toyo Kaisha, Ltd.) was used as a separator. As a negative electrode, a lithium foil (manufactured by Honjo Metal Co., Ltd.) cut to a diameter of 13 mmϕ was used. Further, a positive electrode, a separator and a negative electrode were laminated in the stated order to obtain a laminate, and the laminate was impregnated with the non-aqueous electrolytic solution of Example 21 or Comparative Example 11, and then sealed to produce a coin cell. The coin cells were all assembled in an argon globe box having a dew point of -70°C or lower.

### <Coulombic efficiency of coin cell>

Each of the produced coin cells was charged at a charge current of 0.5 mA/cm² for 2 hours in a thermostatic bath at 25°C to precipitate metal lithium, and then discharged to a final voltage of 1.0 V at a discharge current of 0.5 mA/cm² to dissolve the metal lithium. The battery was charged and discharged 10 cycles by a current-constant-voltage method under the present conditions. Comparative evaluation of the coulombic efficiency after 10 cycles was performed. Table 6 shows the ratios of the coulombic efficiency in Example 21 and Comparative Example 11.

**[Table 6]**

| | Coulombic efficiency [%] |
|---|---|
| Example 21 | 79 |
| Comparative Example 11 | 16 |

As can be seen from Table 6, the coulombic efficiency after 10 cycles was 16% in Comparative Example 11 where a non-aqueous electrolytic solution containing only LiPF₆ was used as an electrolyte. On the other hand, in Example 21 where a non-aqueous electrolytic solution containing LiNO₃ and LiPO₂F₂ was used, the coulombic efficiency was 79%, and better charge-discharge efficiency (cycle characteristics) was exhibited as compared to Comparative Example 11. As a result, it was confirmed that a non-aqueous electrolytic solution in which a mixed solvent composed of DMSO and TEP was used as a non-aqueous solvent, and a lithium ion secondary battery using the non-aqueous electrolytic solution were also excellent in usefulness.

### DESCRIPTION OF REFERENCE SIGNS

- 1: Positive electrode
- 2: Negative electrode
- 3: Separator
- 4: Positive electrode can
- 5: Negative electrode can
- 6: Gasket
- 7: Spacer

## Claims

1. A flame-retardant non-aqueous electrolytic solution comprising at least a non-aqueous solvent and an electrolyte dissolved in the non-aqueous solvent, wherein
the non-aqueous solvent contains at least one of phosphoric acid esters of chemical formulae (1) to (3) below,
the electrolyte contains at least one of a difluorophosphoric acid salt and a nitric acid salt, and
a content of the phosphoric acid ester is 20 mass% or more with respect to a total mass of the flame-retardant non-aqueous electrolytic solution: 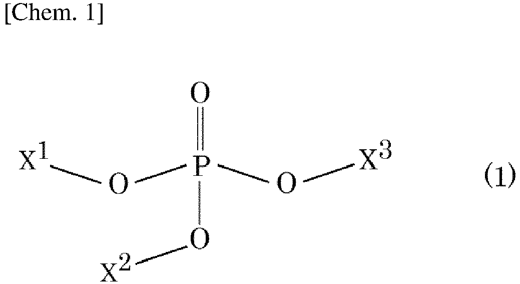 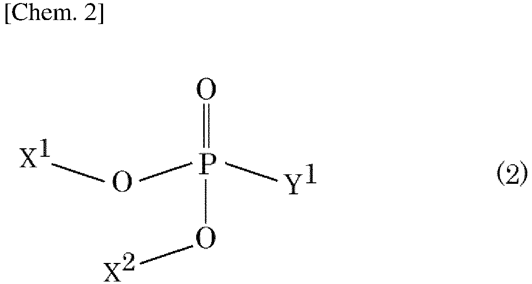 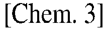 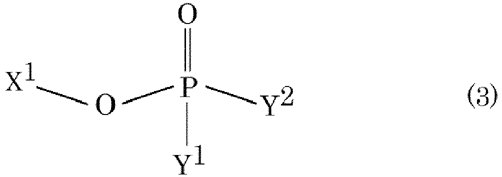
wherein X¹ to X³ each independently represent a hydrocarbon group having 1 to 20 carbon atoms; a silyl group having 1 to 20 carbon atoms; a hydrocarbon group having 1 to 20 carbon atoms and at least one of a halogen atom, a heteroatom and an unsaturated bond; or a silyl group having 1 to 20 carbon atoms and at least one of a halogen atom, a heteroatom and an unsaturated bond, or each of X¹ to X³ is any of the hydrocarbon group having 1 to 20 carbon atoms; the silyl group having 1 to 20 carbon atoms; the hydrocarbon group having 1 to 20 carbon atoms and at least one of a halogen atom, a heteroatom and an unsaturated bond; and the silyl group having 1 to 20 carbon atoms and at least one of a halogen atom, a heteroatom and an unsaturated bond, and arbitrarily selected combinations thereof are bonded to one another to form a cyclic structure, and Y¹ and Y² each independently represent a halogen atom.

2. The flame-retardant non-aqueous electrolytic solution according to claim 1, wherein a molar fraction of at least one of the difluorophosphoric acid salt and the nitric acid salt is 0.1 or more with respect to a total number of moles of the electrolyte.

3. The flame-retardant non-aqueous electrolytic solution according to claim 1, wherein at least one of the difluorophosphoric acid salt and the nitric acid salt is an alkali metal salt.

4. The flame-retardant non-aqueous electrolytic solution according to claim 1, wherein at least one of the difluorophosphoric acid salt and the nitric acid salt is a lithium salt.

5. The flame-retardant non-aqueous electrolytic solution according to claim 1, wherein the phosphoric acid ester is trimethyl phosphate, triethyl phosphate, tributyl phosphate, triphenyl phosphate, diethyl monofluorophosphate, diethyl monochlorophosphate, ethyl difluorophosphate, ethyl dichlorophosphate, and diethyl(2-(2-(2-methoxyethoxy)ethoxy)ethyl) phosphate.

6. The flame-retardant non-aqueous electrolytic solution according to claim 1, further comprising, as the electrolyte, at least one of other electrolytes having an anion of BF₄⁻, PF₆⁻, N(CF₃SO₂)₂⁻ or N(SO₂F)₂⁻.

7. The flame-retardant non-aqueous electrolytic solution according to claim 1, further comprising, as the non-aqueous solvent, at least one selected from a group consisting of a cyclic carbonic acid ester, a chain carbonic acid ester, cyclic ether, chain ether, a lactone compound, a chain ester, a nitrile compound, an amide compound, a sulfone compound and a sulfoxide compound.

8. The flame-retardant non-aqueous electrolytic solution according to claim 1, further comprising, as the non-aqueous solvent, at least one selected from a group consisting of propylene carbonate, ethylene carbonate, γ-butyrolactone, dimethyl sulfoxide, and tetraethylene glycol dimethyl ether.

9. A secondary battery comprising at least the flame-retardant non-aqueous electrolytic solution according to any one of claims 1 to 8, and a positive electrode and a negative electrode.
